# EUROPEAN PATENT APPLICATION

(11) **EP 4 276 728 A1**
(43) Date of publication of application: **15.11.2023**
(21) Application number: 23748687.3
(22) Date of filing: 17.01.2023
(51) Int. Cl.: G06Q 30/0601, G06T 7/00

(54) **INFORMATION PROCESSING SYSTEM**

(30) Priority: 10.03.2022 JP 2022037127
(71) Applicant: Marketvision Co.,Ltd., Tokyo 102-0075 (JP)
(72) Inventor: TANII Akiyoshi, Tokyo 1020075 (JP)
(74) Representative: Betten & Resch
(86) International application number: PCT/JP2023/001106
(87) International publication number: WO 2023/171132

(57) **Abstract**

An object is to provide an information processing system that detects a change in outer packing of goods displayed on the present display shelf.

An information processing system that detects a change in outer packing of goods displayed on a display shelf, and the information processing system includes: an image information input receipt processing unit configured to receive an input of image information obtained by imaging the display shelf; and an outer packing change detection processing unit configured to detect the change in the outer packing of the goods that appears in the image information, in which the outer packing change detection processing unit determines whether there is a change of the goods displayed on the display shelf between a current time and before the current time, and in a case where there is no change in the goods displayed, determines whether there is the change in the outer packing of the goods that appears in the image information between the current time and before the current time.

## Description

### Technical Field

The present invention relates to an information processing system that detects a change in outer packing of goods displayed on a display shelf.

### Background Art

In various stores such as convenience stores and supermarkets, goods to be sold are generally placed on display shelves. Therefore, by displaying a plurality of goods on a display shelf, even though one of the goods is purchased, someone else is able to purchase identical goods. Then, it is important to manage where and how many goods are displayed on the display shelf from the viewpoint of sales strategy of the goods.

Therefore, in order to grasp an actual displayed situation of the goods in a store, there is a method for imaging the display shelf with an imaging device and automatically specifying displayed goods from image information obtained by imaging the goods. For example, there is a method for using an image recognition technology for an image obtained by imaging a display shelf in a store, based on a sample image of every one of the goods. As examples of these conventional techniques, there are following Patent Literature 1 and Patent Literature 2.

### Citation List

### Patent Literature

Patent Literature 1: JP H05-342230 A
Patent Literature 2: JP H05-334409 A

### Summary of Invention

### Technical Problem

The invention of Patent Literature 1 is a system that supports a person who does not have knowledge about on which display shelf goods should be displayed. Hence, it is possible to understand where the goods should be displayed, but it does not intend to specify the displayed goods. In addition, Patent Literature 2 is a system that supports inputs of images of goods, in a shelf allocation support system that supports displaying of the goods. However, the system of Patent Literature 2 only supports the inputs of the images of the goods when using the shelf allocation support system. Even though this system is used, it is not possible to grasp a specific displayed situation of the goods.

In a case of identifying goods displayed on a display shelf, it is common to use various image recognition technologies such as a method for imaging image information of goods to be a sample from a plurality of angles beforehand and performing matching between the image information of the sample and the image information obtained by imaging the display shelf, and a method for identifying goods displayed on the display shelf by performing machine learning using the image information of each goods beforehand.

On the other hand, in recent years, the design of the outer packing (package or external appearance) of goods is often changed for every season or every campaign for the same goods. For example, in spring, the design may be changed to a spring-like design imagining cherry blossoms on the outer packing of goods, or an animation character may be displayed on the outer packing of the goods in collaboration with the animation character. Other than that, a point seal for campaign may be attached to goods, or a seal for encouraging purchase promotion such as "20% increase" may be attached to goods. This case also influences the external appearance of goods.

As described above, there is no change of the goods such as a goods name or a JAN code, but in a case where only the outer packing of the goods has been changed, this will lead to a degradation in recognition accuracy when the goods displayed on the display shelf is identified by use of the image recognition technology. In this case, it is necessary to detect a change in the outer packing of the goods at an early stage and to image information to be a sample or to perform relearning, and the like, but such processing cannot be performed in conventional Patent Literature 1 or 2.

### Solution to Problem

In view of the above problems, the present inventor has invented an information processing system for detecting that there is no change of goods but there is a change in outer packing of the goods.

A first invention is an information processing system that detects a change in outer packing of goods displayed on a display shelf, the information processing system including: an image information input receipt processing unit configured to receive an input of image information obtained by imaging the display shelf; and an outer packing change detection processing unit configured to detect the change in the outer packing of the goods that appears in the image information, in which the outer packing change detection processing unit determines whether there is a change of the goods displayed on the display shelf between a current time and before the current time, and in a case where there is no change in the goods displayed, determines whether there is the change in the outer packing of the goods that appears in the image information between the current time and before the current time.

With the configuration as in the present invention, it is possible to detect that there is no change of goods but there is a change in the outer packing of the goods. By this detection, the outer packing of new goods can be stored as sample information or can be subject to machine learning.

In the above-described invention, the information processing system can be configured such that the outer packing change detection processing unit
compares the current time with before the current time with regard to goods identification information of the goods identified from the image information, or the goods displayed on the display shelf or an IC tag attached to a product tag, and determines presence or absence of the change.

In the above-described invention, the information processing system can be configured such that the outer packing change detection processing unit compares goods identification information recognized from a place or a face of the image information, or an area of a product tag in current processing with goods identification information recognized from a place or a face of the image information, or an area of a product tag in processing before the current processing, and determines the presence or the absence of the change in the goods displayed on the display shelf.

In the above-described invention, the information processing system can be configured such that the outer packing change detection processing unit compares image information of the product tag of the image information in current processing with image information of the product tag of image information in processing before the current processing, and determines the presence or the absence of the change in the goods displayed on the display shelf.

In the above-described invention, the information processing system can be configured such that the outer packing change detection processing unit compares association between the goods displayed and the product tag in current processing with association between the goods displayed and the product tag in processing before the current processing, and detects the presence or the absence of the change in the goods displayed on the display shelf.

By performing the above processing in these inventions, it is possible to determine a change in the goods displayed on the display shelf.

In the above-described invention, the information processing system can be configured such that the outer packing change detection processing unit, with regard to image information of the goods in a place area to be processed, compares image information of the goods in the place area of the current time with image information of the goods in the place area before the current time, and determines whether there is the change in the outer packing of the goods.

In the above-described invention, the information processing system can be configured such that the outer packing change detection processing unit, with regard to image information of the goods of a place area to be processed, inputs image information of the goods in the place area of the current time and image information of the goods in the place area before the current time into a learning model in which a weighting coefficient between neurons of each layer of a neural network including a large number of intermediate layers is optimized, and determines whether there is the change in the outer packing of the goods in the place area, based on its output value, and the learning model gives image information of a plurality of goods and information of a result of whether there is a change in the outer packing of the goods, as correct data, to cause performing of machine learning.

By performing the above processing in these inventions, in a case where there is no change in the goods displayed between the current time and before the current time, it is possible to determine whether there is a change in the outer packing of the goods.

The first invention can be implemented by causing a computer to read and execute a program in the present invention. That is an information processing program for causing a computer to function as: an image information input receipt processing unit configured to receive an input of image information obtained by imaging the display shelf; and an outer packing change detection processing unit configured to detect a change in the outer packing of the goods that appears in the image information, in which the outer packing change detection processing unit determines whether there is a change of the goods displayed on the display shelf between a current time and before the current time, and in a case where there is no change in the goods displayed, determines whether there is the change in the outer packing of the goods that appears in the image information between the current time and before the current time.

### Advantageous Effects of Invention

By using the information processing system in the present invention, it is possible to detect that there is no change of goods, but there is a change in the outer packing of the goods.

### Brief Description of Drawings

Fig. 1 is a block diagram schematically illustrating an example of a configuration of an information processing system in the present invention.
Fig. 2 is a block diagram schematically illustrating an example of a configuration of a displayed goods recognition processing unit in the information processing system in the present invention.
Fig. 3 is a block diagram schematically illustrating an example of a configuration of a product tag recognition processing unit in the information processing system in the present invention.
Fig. 4 is a block diagram schematically illustrating an example of a hardware configuration of a computer to be used in the information processing system in the present invention.
Fig. 5 is a flowchart illustrating an example of an entire processing process in the information processing system in the present invention.
Fig. 6 is a diagram illustrating an example of captured image information.
Fig. 7 is a diagram illustrating another example of the captured image information.
Fig. 8 is a view illustrating an example of image information of the captured image information of Fig. 6 that has been subjected to correct placement.
Fig. 9 is a view illustrating an example of the image information of the captured image information of Fig. 7 that has been subjected to the correct placement.
Fig. 10 is a diagram schematically illustrating a state in which inputs for designating each shelf area and a product tag arrangement area are received for correct placement image information that has been subjected to the correct placement on the image information obtained by imaging a display shelf on which goods are displayed.
Fig. 11 is a diagram schematically illustrating a state in which inputs for designating each shelf area and a product tag arrangement area are received for correct placement image information that has been subjected to the correct placement on the image information obtained by imaging a display shelf on which goods are hung and displayed.
Fig. 12 is a diagram illustrating an example of image information of a product tag arrangement area in which the image information of the product tag arrangement area of Fig. 10 has been subjected to the correct placement.
Fig. 13 is a diagram illustrating an example of image information of the product tag arrangement area in Fig. 10.
Fig. 14 is a diagram schematically illustrating processing, by a product tag specification processing unit, of specifying an upper side position and a lower side position of a product tag area.
Fig. 15 is a diagram schematically illustrating processing, by the product tag specification processing unit, of specifying a position of a product tag area in a lateral direction.
Fig. 16 is a diagram schematically illustrating a state in which the product tag area is specified from the image information of the product tag arrangement area that has been subjected to the correct placement in Fig. 12.
Fig. 17 is a diagram schematically illustrating image information obtained by binarizing a product tag area in processing by an in-product tag information specification processing unit.
Fig. 18 is a diagram schematically illustrating a state in which a box is generated in processing by the in-product tag information specification processing unit.
Fig. 19 is a diagram schematically illustrating a state in which blocks are generated in processing by the in-product tag information specification processing unit.
Fig. 20 is a diagram illustrating an example of a name of the goods written in a product tag, a result of OCR recognition, a name of the goods having a minimum editing distance from among the names of the goods stored in a goods dictionary, and an editing distance.
Fig. 21 is a diagram illustrating an example of a correspondence relationship of the editing distance allowed to be confirmed for every number of characters of a final candidate.
Fig. 22 is a diagram illustrating an example of sample information stored in a sample information storage unit.
Fig. 23 is a view schematically illustrating a relationship between a place and a face in a display shelf.
Fig. 24 is a diagram schematically illustrating processing by a correspondence relationship determination processing unit, in a case where the number of the goods types and the number of the product tags are equal to each other.
Fig. 25 is a diagram schematically illustrating processing by the correspondence relationship determination processing unit, in a case where the number of the goods types is greater than the number of the product tags.
Fig. 26 is a diagram schematically illustrating processing by the correspondence relationship determination processing unit, in a case where the number of the goods types is smaller than the number of the product tags.
Fig. 27 is a diagram schematically illustrating second or subsequent processing by the correspondence relationship determination processing unit.
Fig. 28 is a flowchart schematically illustrating an example of outer packing change detection processing.
Fig. 29 is a diagram illustrating an example of the captured image information.
Fig. 30 is a diagram illustrating an example of correct placement image information that has been subjected to correct placement processing on the captured image information of Fig. 29.

### Description of Embodiments

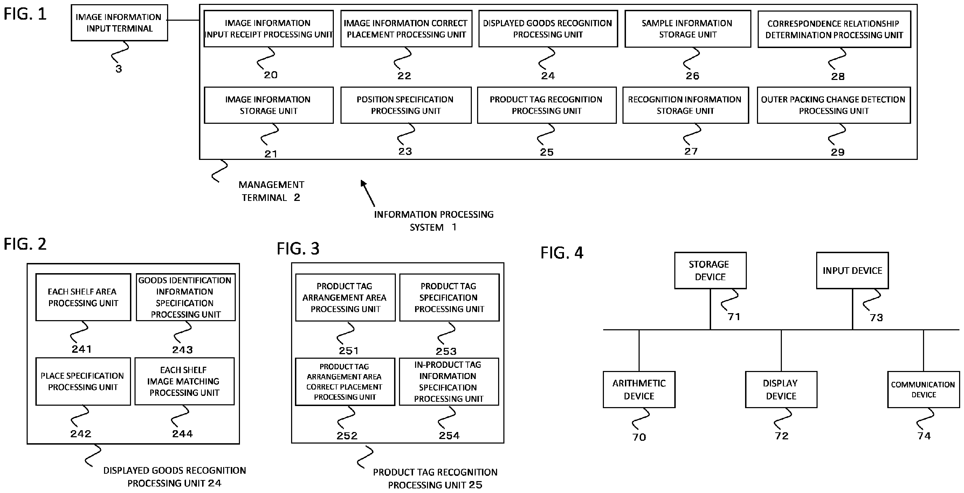

An example of a processing function of an information processing system 1 in the present invention is illustrated as block diagrams in Figs. 1 to 3. The information processing system 1 uses a management terminal 2 and an image information input terminal 3. Fig. 1 is a block diagram illustrating overall functions of the information processing system 1, Fig. 2 is a block diagram illustrating functions of a displayed goods recognition processing unit 24 to be described later, and Fig. 3 is a block diagram illustrating functions of a product tag recognition processing unit 25 to be described later.

The management terminal 2 serves as a computer to be used by an organization such as a business enterprise that manages the information processing system 1. In addition, the image information input terminal 3 is a terminal for inputting image information obtained by imaging a display shelf in a store.

The management terminal 2 and the image information input terminal 3 in the information processing system 1 are realized by using a computer. Fig. 4 schematically illustrates an example of a hardware configuration of the computer. The computer includes an arithmetic device 70 such as a CPU that performs arithmetic processing of a program, a storage device 71 such as a RAM or a hard disk that stores information, a display device 72 such as a display that displays information, an input device 73 such as a keyboard or a mouse with which information can be input, and a communication device 74, which transmits and receives a processing result of the arithmetic device 70 or information stored in the storage device 71 through a network such as the Internet or a LAN.

In a case where the computer includes a touch panel display, the display device 72 and the input device 73 may be integrally configured. The touch panel display is often used as, for example, a portable communication terminal such as a tablet computer or a smartphone, without being limited thereto.

The touch panel display is a device in which functions of the display device 72 and the input device 73 are integrated such that an input can be made directly on the display with a predetermined input device (such as a pen for a touch panel), a finger, or the like.

The image information input terminal 3 may include an imaging device such as a camera, in addition to the above respective devices. As the image information input terminal 3, a portable communication terminal such as a mobile telephone, a smartphone, or a tablet computer can also be used.

Regarding the respective units in the present invention, their functions are only logically distinguished from one another, and may physically or practically constitute an identical area. In the processing by each unit in the present invention, its processing order can be appropriately changed. In addition, the processing may be partially omitted. For example, correct placement processing to be described later can be omitted. In such a case, processing can be performed on image information that has not been subjected to the correct placement processing.

For a case of determining a displayed situation of goods, based on the captured image information, the information processing system 1 includes an image information input receipt processing unit 20, an image information storage unit 21, an image information correct placement processing unit 22, a position specification processing unit 23, a displayed goods recognition processing unit 24, a product tag recognition processing unit 25, a sample information storage unit 26, a recognition information storage unit 27, a correspondence relationship determination processing unit 28, and an outer packing change detection processing unit 29.

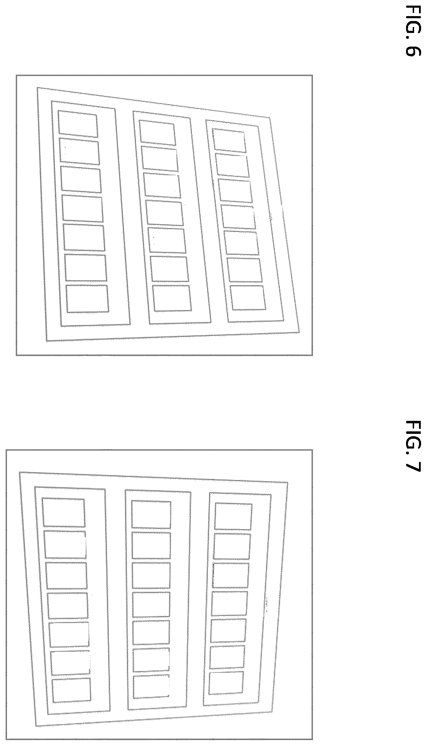

The image information input receipt processing unit 20 receives an input of image information (captured image information) of the display shelf in a store that has been imaged by the image information input terminal 3, and stores the image information in a predetermined storage unit (not illustrated) provided in the storage device 71. In addition to the captured image information, the inputs of imaged date and time, store identification information such as a store name, image information identification information for identifying the image information, and the like are also desirably received from the image information input terminal 3. Figs. 6 and 7 illustrate examples of the captured image information. In each of Figs. 6 and 7, there are three shelves in a display shelf, and Figs. 6 and 7 each illustrate the captured image information in which the goods are displayed there. Note that in the present invention, although the processing is not particularly specified, the display shelf or each shelf is long in a lateral direction, in many cases. For this reason, in the processing, each shelf may be separated by a constant width to be set as a processing target in each type of the processing.

The image information storage unit 21 stores the captured image information, the imaged date and time, the store identification information, the image information identification information, and the like that have been received from the image information input terminal 3 in association with each other. It is sufficient if the captured image information includes image information to be a processing target in the present invention. In general, in simply imaging, it is difficult to image an imaging target object facing the front. Therefore, correction processing for correcting the imaging target object to be in a front-facing state, for example, trapezoid correction processing is desirably performed. In a case of imaging one display shelf with a plurality of pieces of image data, image information obtained by synthesizing those pieces into a single piece of image information is also included. In addition, image information that has been subjected to distortion correction processing is also included in the captured image information.

The image information correct placement processing unit 22 generates correct placement image information that has been subjected to the processing of correcting the captured image information stored in the image information storage unit 21 so that the imaging target object faces the front (correct placement processing), for example, the trapezoid correction processing. The trapezoid correction processing is correction processing to be performed so that each shelf of the display shelf that appears in the captured image information becomes horizontal and the product tags (for example, price labels) for the goods displayed therein become vertical. The correct placement means changing the image information so that the optical axis of the lens of the imaging device is made to be the same as that of a case of imaging from a sufficiently long distance along a direction perpendicular to a plane to be an imaging target. An example is the trapezoid correction processing.

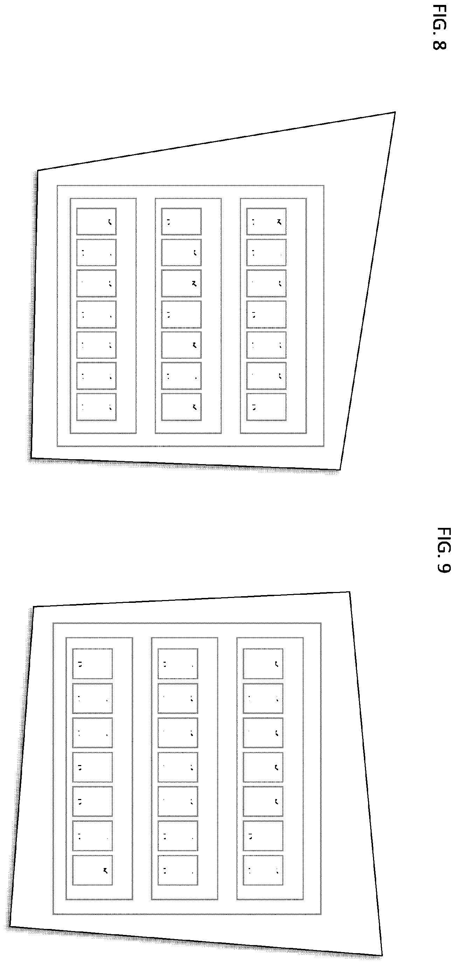

In the trapezoid correction processing performed by the image information correct placement processing unit 22, inputs for designating four vertexes in the captured image information are received, and the trapezoid correction processing is performed by use of the respective vertexes. The four vertexes for receiving the designation may be four vertexes of each shelf of the display shelf or the four vertexes of shelf positions of the display shelf. In addition, four vertexes of a group of two or three shelves may be used. Any four points can be designated for the four vertexes. Fig. 8 illustrates an example of the captured image information (correct placement image information) that has been subjected to the correct placement on the captured image information of Fig. 6, and Fig. 9 illustrates an example of the captured image information that has been subjected to the correct placement on the captured image information of Fig. 7.

The position specification processing unit 23 specifies an area of each shelf where goods are likely to be arranged (each shelf area) and an area where a product tag is likely to be attached (product tag arrangement area) from the correct placement image information that has been subjected to the trapezoid correction processing on the captured image information, by the image information correct placement processing unit 22. That is, the display shelf appears in the captured image information and the correct placement image information. However, the display shelf includes each shelf area where goods are likely to be displayed and a product tag arrangement area where the product tag for the goods displayed on each shelf area is likely to be attached. Therefore, each shelf area and the product tag arrangement area are specified from the correct placement image information. For specifying each shelf area and the product tag arrangement area, an operator of the management terminal 2 may manually designate each shelf area and the product tag arrangement area, the position specification processing unit 23 may receive the designation, or each shelf area and the product tag arrangement area may be automatically specified in second or subsequent processing, based on information of each shelf area and the product tag arrangement area, inputs of which have been manually received in first processing.

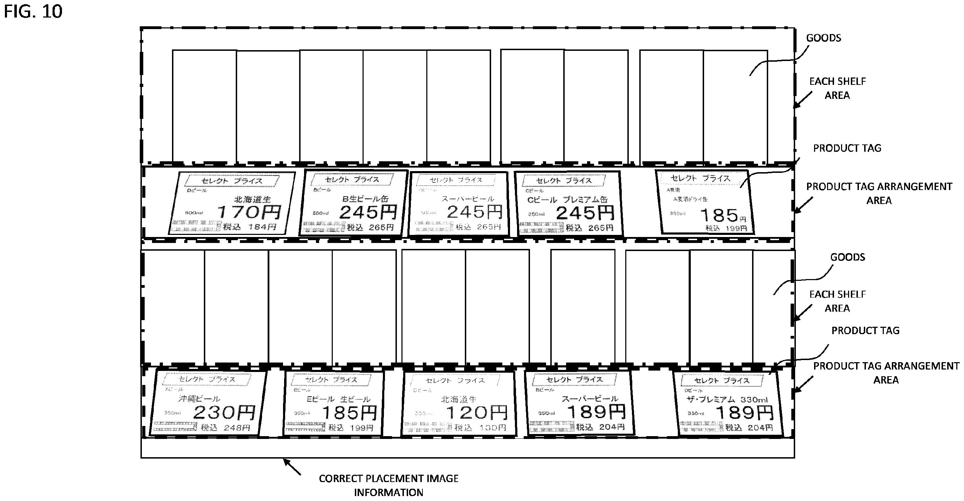

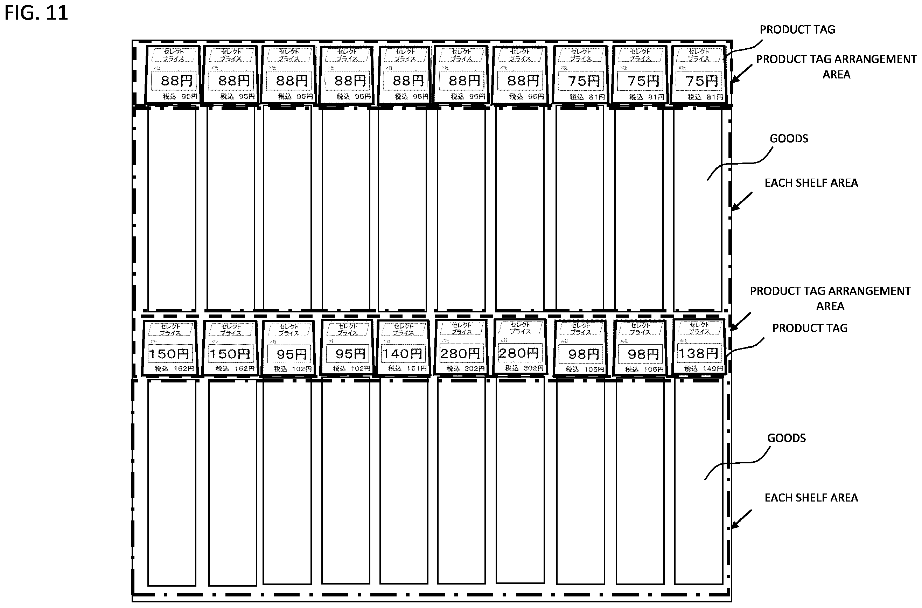

Fig. 10 schematically illustrates a state in which the inputs for designating each shelf area and the product tag arrangement area have been received, for the correct placement image information, in which the image information obtained by imaging a display shelf on which goods such as beverage cans are displayed has been subjected to the correct placement. In addition, Fig. 11 schematically illustrates a state in which the inputs for designating each shelf area and the product tag arrangement area have been received, for the correct placement image information in which the image information obtained by imaging a display shelf, on which goods such as toothbrushes are hung and displayed, has been subjected to the correct placement.

Note that in specifying each shelf area and the product tag arrangement area, the position specification processing unit 23 may specify each shelf area and the product tag arrangement area by using deep learning. In this case, the above correct placement image information may be input into a learning model in which weighting coefficients between neurons of the respective layers of a neural network including a large number of intermediate layers are optimized, and each shelf area and the product tag arrangement area may be specified, based on its output value. In addition, as the learning model, it is possible to use a model in which each shelf area and the product tag arrangement area are given, as correct answer data, to various pieces of the correct placement image information.

The displayed goods recognition processing unit 24 performs processing of recognizing the goods displayed on each shelf in the display shelf that appears in the correct placement image information.

In a case of recognizing goods identification information of the goods displayed on the display shelf, based on the captured image information, the displayed goods recognition processing unit 24 includes an each shelf area processing unit 241, a place specification processing unit 242, a goods identification information specification processing unit 243, and an each shelf image matching processing unit 244.

The each shelf area processing unit 241 specifies the image information of each shelf area that has been specified by the position specification processing unit 23, as each shelf area image information. The each shelf area processing unit 241 may actually cut out the image information, or may virtually cut out the image information by specifying the image information of the area without actually cutting out the image information. Note that in a case where there are a plurality of shelves in the display shelf, each shelf is cut out as each shelf area image information. In addition, coordinates indicating each shelf area denote coordinates of vertexes for specifying such an area, and may include, for example, coordinates of four points or coordinates of two points such as an upper right and a lower left or an upper left and a lower right in the correct placement image information. Further, the coordinates denote relative coordinates with a predetermined position as a reference (for example, an upper left vertex of the display shelf) in the image information, such as the display shelf in the correct placement image information.

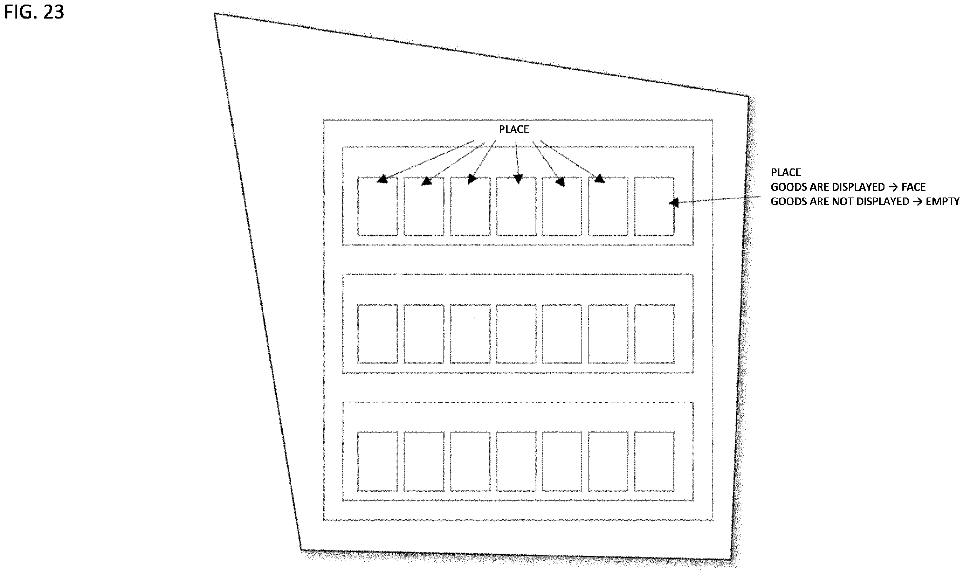

The place specification processing unit 242 specifies an area of a place for every shelf in each shelf area in the correct placement image information. The place denotes an area where the goods are to be placed, and it does not matter whether the goods are placed. The size of the area of the place is identical or substantially identical to the goods to be placed there. Then, the place where the goods are actually displayed will be referred to as a "face". In addition, a case where goods are not displayed on the place will be referred to as "empty". This is schematically illustrated in Fig. 23. Note that in the processing in the present invention, the processing is performed with the place as a reference, but the processing may be performed with the face as a reference, instead of the place. In this case, processing with the place as a reference is assumed to be read as the face, and the place specification processing unit 242 functions as the face specification processing unit 242.

The place specification processing unit 242 is preferably divided into first place specification processing and second or subsequent place specification processing. Note that the place specification processing unit 242 preferably specifies an area of the place for each shelf, without being limited to this, and may specify an area of the place from the entire display shelf in the image information or from a plurality of shelves.

In the first place specification processing by the place specification processing unit 242, a place is specified within a range of an area (preferably, a rectangular area) constituted of the coordinates of each shelf that have been specified by the position specification processing unit 23. Specifically, the area of the place is specified by specifying a narrow shadow generated between the goods in each shelf area, specifying a repeated pattern of image, specifying a step on an upper side of a package, specifying a separation position based on a restriction such as an identical goods width, or the like. Note that in specifying the area of the place, the place specification processing unit 242 may specify the area of the place by using the deep learning. In this case, the image information of an area to be a processing target, for example, each shelf area may be input into the learning model in which the weighting coefficients between neurons of the respective layers of the neural network including a large number of intermediate layers are optimized, and the area of the place may be specified, based on its output value. In addition, as the learning model, it is possible to use a learning model in which areas to be various processing targets, for example, an area of a place is given, as correct answer data, to the image information of each shelf area.

As the processing of specifying the place, any method is adoptable depending on a category of the goods or a form of the goods, without being limited to the above description. In addition, a correction input by a person in charge may be received for the place that has been automatically specified. Furthermore, an input of the position of the place may be received from the person in charge. Regarding the coordinates of the area that constitute the specified place, imaged date and time information, store information, image information identification information of the captured image information, image identification information of the correct placement image information, and place identification information for identifying the place are managed in association with the coordinates of the area of the place in the correct placement image information. In addition, coordinates indicating the area of the place denote coordinates of vertexes for specifying a rectangular area, and may be, for example, coordinates of four points or coordinates of two points such as an upper right and a lower left or an upper left and a lower right in the correct placement image information. Further, the coordinates denote relative coordinates with a predetermined position as a reference (for example, an upper left vertex of the display shelf) in the image information, such as the display shelf in the correct placement image information.

In general, goods of similar types are placed on one shelf, in many cases. In such cases, the sizes of the goods are almost the same. Therefore, in a case where an area of a place for one type of the goods is specified, the place in such each shelf may be specified by repeatedly setting the area in such each shelf.

In the second or subsequent place specification processing by the place specification processing unit 242, for an identical each shelf of an identical display shelf, the coordinates of the area of the place that have been specified by correct placement image information in previous processing (N-1'th times) may be set to the coordinates of the area of the place that has been specified by the correct placement image information in current processing (N'th times).

The goods identification information specification processing unit 243 specifies goods identification information of the goods displayed on the place for every shelf of the display shelf, by using sample information stored in the sample information. Examples of the goods identification information include, but are not limited to, the name of the goods and a JAN code assigned to the goods. Any information may be used as long as it is possible to identify the goods.

The goods identification information specification processing unit 243 performs the following processing. That is, for every place, by matching the image information of a place with the sample information of the goods stored in the sample information storage unit 26, the goods identification information of the goods displayed on such a place is specified. Specifically, first, a similarity between the image information of the area constituted of the coordinates of the place to be a processing target and the sample information stored in the sample information storage unit 26 is determined, and the goods identification information corresponding to the sample information having the highest similarity is specified. In a case where the specified similarity is equal to or greater than a predetermined threshold value, the specified goods identification information is specified as the goods identification information of the goods displayed on the place constituted of the coordinates.

Here, in order to determine the similarity between the image information of the place and the sample information, the following processing is performed. First, in the processing before the goods identification information specification processing unit 243 performs the goods identification information specification processing, the direction of the image information of the area of the place on each shelf in the correct placement image information and the direction of the sample information are the same (are not overturned or inverted), and the sizes of the respective pieces of image information are substantially the same (in a case where the sizes of the pieces of image information are different from each other within a predetermined range or more, the sizes are kept adjusted so that the sizes of the pieces of image information fall within the predetermined range before the determination of the similarity).

In order to determine the similarity between the image information of the place and the sample information, the goods identification information specification processing unit 243 extracts a feature point based on an image feature quantity (for example, local feature quantity) of the image information of the place and a feature point based on an image feature quantity (for example, local feature quantity) of the sample information, respectively. Then, a pair having the highest similarity between the feature point of the image information of the place and the feature point of the sample information is detected, and differences in coordinates of respectively corresponding points are calculated. Then, an average value of the differences is calculated. The average value of the differences indicates an overall average movement amount of the image information of the place and the sample information. Then, the coordinate differences of pairs of all the feature points are compared with the average coordinate difference, and a pair having a large deviation degree are excluded. Then, the similarity is ranked among the number of remaining corresponding points.

The similarity between the image information of the place and the sample information can be calculated in the method as described above. In addition, in order to improve its accuracy, an earth movers distance (EMD) between the color histograms may be calculated to be set as an index of the similarity. Accordingly, it becomes possible to make a comparison of similarity that is relatively strong against an environmental change in brightness information or the like of the captured image information, and to specify the similarity with high accuracy.

In the determination of the similarity, other than the above description, an EMD between signatures (aggregation of image feature quantities and weights) of the image information of the area of each place may be calculated to be set as an index of the similarity. As the image feature quantity of the signature, for example, the frequency distribution in an HSV color space of the image information of the place area is obtained, and grouping is conducted for hue and saturation, so that the image feature quantity can be set with the number of features and the area in the HSV color space. The grouping for the hue and the saturation is conducted to reduce a dependence degree on the brightness so as not to be largely influenced by an imaging condition.

In addition, to accelerate the processing, it is possible to use a similarity such as an L2 distance between image feature quantities such as a color correlogram or a color histogram of the image information in an appropriate color space, instead of the signature and the EMD.

The determination of the similarity is not limited to the above description. The goods identification information that has been specified is stored in the recognition information storage unit 27 in association with the imaged date and time information, the store information, the image information identification information of the captured image information, the image identification information of the correct placement image information, and the place identification information for identifying the place.

The goods identification information specification processing unit 243 may specify the goods identification information by using the deep learning, when specifying the goods identification information of the goods displayed in the image information of the place. In this case, the image information of the place may be input into the learning model in which the weighting coefficients between neurons of the respective layers of the neural network including a large number of intermediate layers are optimized, and the goods identification information may be specified, based on its output value. In addition, as the learning model, it is possible to use a model in which the goods identification information is given, as correct answer data, to image information of various places.

Note that a place in which the goods identification information has been specified becomes a face, and thus information indicating that such a place is the "face" is stored in the recognition information storage unit 27. A place in which the goods identification information has not been specified becomes "empty", and thus information indicating that the place is "empty" is stored in the recognition information storage unit 27.

The goods identification information that has been specified as described above is stored in the recognition information storage unit 27 in association with the imaged date and time information, the store information, the image information identification information of the captured image information, the image identification information of the correct placement image information, the place identification information for identifying the place, and information indicating the face or the empty.

On the basis of the image information of the area of each shelf in the correct placement image information in the previous processing (N-1'th times) and the image information of the area of each shelf in the correct placement image information in the current processing (N'th times), the each shelf image matching processing unit 244 determines that the goods identification information or the "empty" of each place in such each shelf is identical, in a case where the similarity is high. Such similarity determination processing, as described above, may be a similarity determination based on the image feature quantity of the image information of the area in each shelf in the correct placement image information in the previous processing (N-1'th times) and the image information of the area in each shelf in the correct placement image information in the current processing (N'th times), or may use the EMD between color histograms. In addition, there is no intention of being limited thereto. Then, instead of the specification processing in the unit of every place by the goods identification information specification processing unit 243, the goods identification information specification processing unit 243 is caused to store the goods identification information of each place in such each shelf in the correct placement image information of the N'th times in the recognition information storage unit 27, as being identical to the goods identification information of each place in its identical each shelf of the N-1'th times. Accordingly, it becomes possible to omit processing for each shelf in which a change hardly occurs, such as each shelf in which a change does not occur in the goods so much, or conversely each shelf that is managed in an extremely short cycle. Note that the processing by the each shelf image matching processing unit 244 does not have to be provided.

The displayed goods recognition processing unit 24 may collectively perform the processing of the place specification processing unit 242 and the processing of the goods identification information specification processing unit 243 by use of the deep learning or the like.

The product tag recognition processing unit 25 in the management terminal 2 performs processing of recognizing the product tag information written on the product tag in a product tag area of the display shelf that appears in the correct placement image information. Examples of the product tag information include price, without being limited thereto.

In recognizing the goods identification information of the product tag, based on the captured image information, the product tag recognition processing unit 25 includes a product tag arrangement area processing unit 251, a product tag arrangement area correct placement processing unit 252, a product tag specification processing unit 253, and an in-product tag information specification processing unit 254.

The product tag arrangement area processing unit 251 cuts out image information of the product tag arrangement area that has been specified by the position specification processing unit 23, as product tag arrangement area image information. The product tag arrangement area processing unit 251 may cut out actually as the image information, or may cut out virtually as the image information without cutting out actually as the image information. Cutting out virtually the image information means causing the processing to be performed on a specified area, for example, a range of a product tag arrangement area as a processing target. Note that in a case where there are a plurality of product tag arrangement areas in the display shelf, the plurality of product tag arrangement areas are respectively cut out as the product tag arrangement area image information. In addition, coordinates indicating the product tag arrangement area denote coordinates of vertexes for specifying the area, and may be, for example, coordinates of four points or coordinates of two points such as an upper right and a lower left or an upper left and a lower right in the correct placement image information. Further, the coordinates denote relative coordinates with a predetermined position as a reference (for example, an upper left vertex of the display shelf) in the image information, such as the display shelf in the correct placement image information.

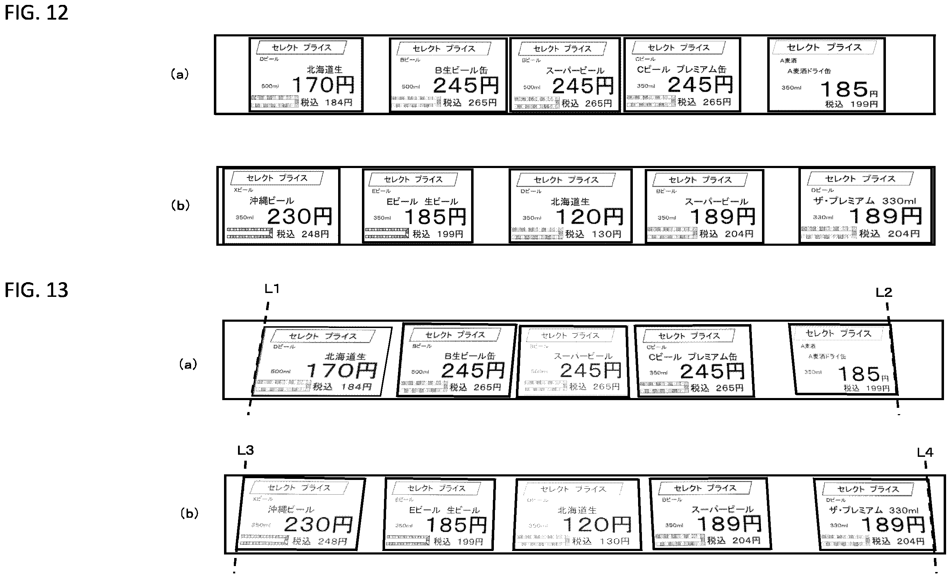

The product tag arrangement area correct placement processing unit 252 performs the trapezoid correction processing for conducting the correct placement on the product tag arrangement area image information that has been cut out by the product tag arrangement area processing unit 251. While the surface of the display shelf is vertical, the surface of the product tag faces upward relative to the vertical surface so as to be easily seen by customers. Therefore, the recognition accuracy is improved by conducting the correct placement on the image information of the product tag arrangement area. Fig. 12 illustrates examples of the image information of the product tag arrangement area that has been subjected to the correct placement on the image information of the product tag arrangement area of Fig. 10. Fig. 12(a) illustrates the image information of the product tag arrangement area in which the image information of the product tag arrangement area in an upper each shelf in Fig. 10 has been subjected to the correct placement, and Fig. 12(b) illustrates the image information of the product tag arrangement area in which the image information of the product tag arrangement area in a lower each shelf in Fig. 10 has been subjected to the correct placement.

By performing following processing, the product tag arrangement area correct placement processing unit 252 conducts the correct placement for the image information of the product tag arrangement area. That is, edge detection is conducted in the image information of the product tag arrangement area, and contour lines (contour lines within a predetermined angle range from the vertical (90 degrees), for example, 70 degrees to 110 degrees) that are similar to the vertical and that has a certain length or more is specified at positions close to both left and right ends. Note that the contour lines at the positions close to both left and right ends are preferably extracted, without being limited thereto. In the case of the image information of the product tag arrangement area of Fig. 10, L1 to L4 are respectively specified as illustrated in Fig 13. Fig. 13(a) illustrates a product tag arrangement area of the upper each shelf in Fig. 10, and Fig. 13(b) illustrates a product tag arrangement area of the lower each shelf in Fig. 10. Note that the contour lines L1 to L4 to be specified are not actually drawn in the image information of the product tag arrangement area. Then, the trapezoid correction processing is performed on the image information of the product tag arrangement area, so that L1 and L2 in Fig. 13(a) and L3 and L4 in Fig. 13(b) respectively become vertical lines. By performing such processing, the image information of the product tag arrangement area has been subjected to the correct placement, and thus the image information of the product tag arrangement area that has been subjected to the correct placement illustrated in Fig. 12 can be obtained. Note that the product tag arrangement area correct placement processing unit 252 performs the processing, and thus the accuracy by the product tag specification processing unit 253 and the in-product tag information specification processing unit 254 can be improved. Therefore, the processing is preferably performed, but can be omitted. In such a case, the product tag specification processing unit 253 and the in-product tag information specification processing unit 254 perform processing on the product tag arrangement area that has been cut out by the product tag arrangement area processing unit 251.

The product tag specification processing unit 253 specifies an area of each product tag (product tag area) from the product tag arrangement area image information that has been subjected to the correct placement. Three types of methods can be mainly used for processing of specifying the product tag area. A first method is a method for specifying a product tag area, based on a contour line, a second method is a method for specifying a product tag area by matching an overall feature such as an overall light and dark distribution with image information of a template of the product tag, and a third method is a method for specifying a product tag area by using the deep learning. Note that any method other than the first method to the third method can also be used.

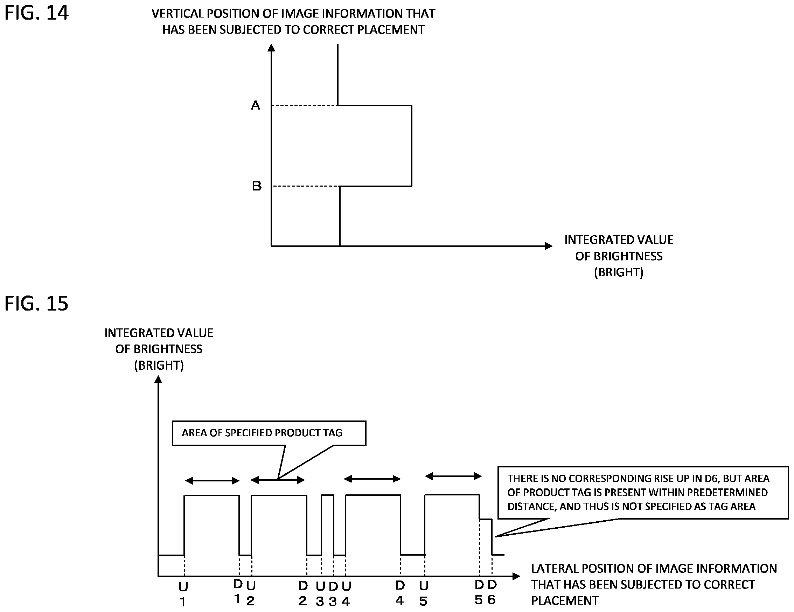

The first method is a method of using the fact that the base color (background color) of the product tags is white (brighter than surrounding colors) in many cases. That is, first, a histogram obtained by laterally integrating brightness information of the image information is generated from the image information of the product tag arrangement area that has been subjected to the correct placement. Then, rise-up and fall-down positions of the histogram are specified, and an upper side position A and a lower side position B of the product tag are specified. Fig. 14 schematically illustrates this processing. Rising up denotes a position that increases steeply (by equal to or greater than a predetermined ratio) from black to white in the histogram, and falling down denotes a position that decreases steeply from white to black in the histogram.

Then, from the image information of the product tag arrangement area that has been subjected to the correct placement, a part between the upper side position A and the lower side position B is cut out, and a histogram in which the brightness information of the product tag arrangement area image information that has been subjected to the correct placement is laterally integrated is generated. Then, the rise-up and fall-down positions in the histogram are specified. A rise-up is paired with a fall-down within a predetermined distance range on the right side of the rise-up position, they are respectively set as a left side position and a right side position, and a product tag area is specified. Then, in a case where there is no product tag area within a predetermined distance, a product tag area is specified on the right side of a rise-up position with which a pair cannot be formed, and on the left side of a fall-down position with which a pair cannot be formed. Fig. 15 schematically illustrates this processing.

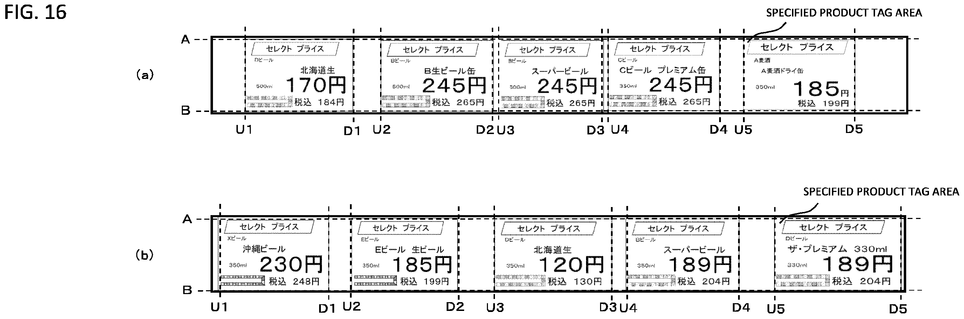

In addition, Fig. 16 illustrates states in which the product tag areas are respectively specified from the image information of the product tag arrangement areas in Fig. 12 that have been subjected to the correct placement in the first method. A rectangular area, which is constituted of the upper side position A, the lower side position B, a left side position (up) U, and a right side position (down) D, denotes an area of the product tag that has been specified.

Note that there are some product tags each having a base color (background color) other than white, for example, red, and characters are written in white. Therefore, in a case where price information or the goods identification information in the product tag cannot be recognized in the above-described processing, the relationship between the white color and the black color may be reversed (brightness and darkness may be reversed) in the image information of the product tag arrangement area, and processing similar to the above-described processing may be performed. Accordingly, it becomes possible to correspond to a product tag having a dark base color and a bright character color.

Note that the processing of reversing the brightness in the image information of the product tag arrangement area may be performed in the case where the information in the product tag cannot be recognized, and in addition, in a case where the information cannot be normally recognized in any type of the processing of specifying the goods identification information, or may be performed regardless of whether the information can be recognized.

The second method is so-called template matching. That is, the image information of the product tag is registered beforehand as a template, and the product tag area is specified by matching the template with the image information of the product tag arrangement area that has been subjected to the correct placement.

The product tag includes a tax-exclusive price, a tax-inclusive price, goods identification information (such as the name of the goods), a manufacturer name, a rated specification, or the like. Therefore, the image information of the product tag that serves as the template includes the goods identification information such as the name of the goods, specific numerals of its price, and characters. In this case, the image information including such parts becomes a determination target in the image matching processing. Hence, such parts are preferably changed into mosaics or deleted, for neutralization or exclusion from the determination target. The neutralization means that high points or low points are not assigned for any input, and the exclusion means that such a part is excluded from a matching target in the image matching processing.

The third method is a method of using the deep learning (deep learning). In this case, the product tag specification processing unit 253 may input the image information of the product tag arrangement area that has been subjected to the correct placement into the learning model in which the weighting coefficients between neurons of the respective layers of the neural network including a large number of intermediate layers are optimized, and may specify the product tag area, based on its output value. In addition, as the learning model, it is possible to use a model in which the product tag area is given, as correct answer data, to the image information of various product tag arrangement areas.

The in-product tag information specification processing unit 254 performs processing of specifying information written in the product tag area that has been specified by the product tag specification processing unit 253 by OCR recognition, the deep learning, or the like. The OCR recognition can be conducted on the entirety or a part of the area that has been specified as the product tag area. In a case of conducting the OCR recognition on the entirety of the area that has been specified as the product tag area, there is a high possibility that erroneous recognition occurs due to noise or the like. Therefore, the target area to be subject to the OCR recognition is preferably limited. In this case, it is sufficient if the processing corresponding to the first method to the third method respectively used by the product tag specification processing unit 253 is performed.

In a case where the first method is used by the product tag specification processing unit 253, first, binarization processing is performed on the product tag area that has been specified. As the binarization processing, from a method of using the brightness of the HSV color space, Otsu method, and a method for extracting a red color (a red color is high in use frequency for numerals and character strings of the product tag, in addition to a black color), one or an extracted combination of a plurality of the methods therefrom can be selected as a candidate.

Then, labeling processing is performed on the image information that has been binarized. The labeling processing denotes processing of assigning an identical number (identification information) to consecutive pixels in white or black in the binarized image information, and forming one island of (grouping) the consecutive pixels. Then, a rectangular area (box) including the island that has been detected by the labeling processing is generated, and its height, width, and baseline of the box are obtained. In generating the box, a rectangle surrounded by minimum vertical and horizontal line segments that surround the area labeled with the identical number is preferably generated, without being limited thereto. Note that in generating the box, an island that does not satisfy a height or a width to be a predetermined threshold value is regarded as noise not to generate the box, and is removed from a processing target without change. For example, an island that is too short in height has a possibility of a horizontal ruled line or dust on an image, an island that is too wide in width has a possibility of a logo or the like, and these are removed as noise.

Characters used in a product tag are generally characters with clear outlines of the entire characters, such as bold Gothic, in many cases. For this reason, even in a case where there is some blurring in the image information, it is possible to detect a group of characters that form one character string, as an island having uniform height and baseline.

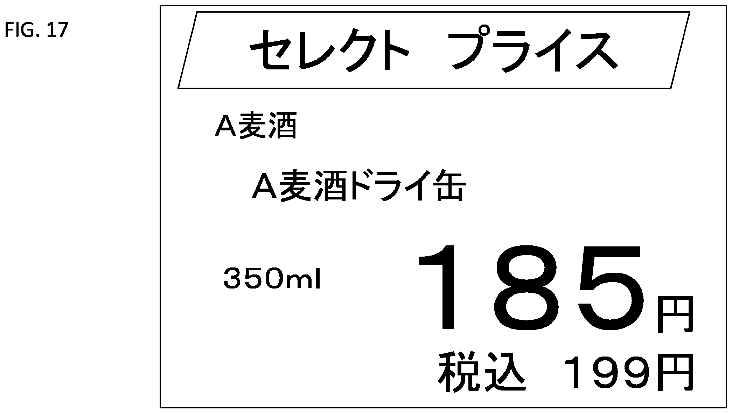

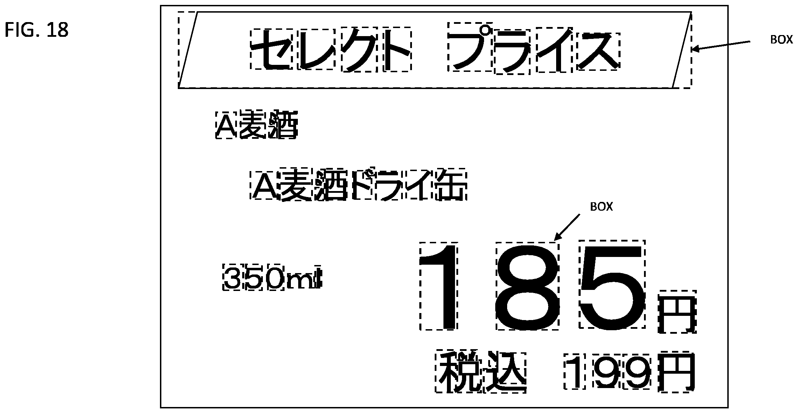

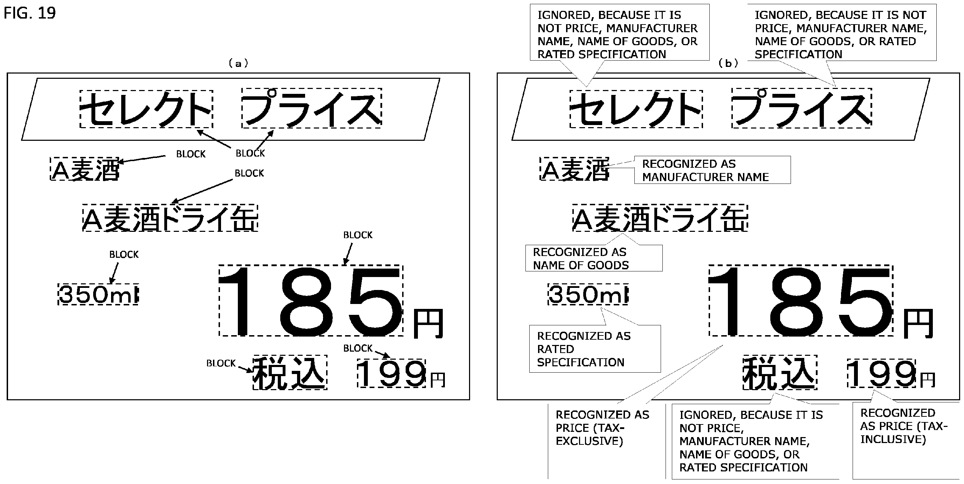

Then, the in-product tag information specification processing unit 254 merges adjacent boxes each having a predetermined similarity to constitute a block. That is, consecutive boxes having baselines and heights that match within a predetermined range and having heights and widths within a certain threshold range are merged to constitute a block. In this situation, small boxes or the like between blocks to be merged are also merged to constitute one block. Accordingly, a voiced sound symbol, a semi-voiced sound symbol, a hyphen, and the like are also incorporated into one block. The block is an area to be subject to the OCR recognition. Then, from among the blocks, a block that is the highest in height is estimated as a price area (tax-exclusive price area), and the OCR recognition is conducted. In addition, the OCR recognition is similarly conducted on other blocks. By performing the processing as described above, character recognition processing can be performed more accurately than the OCR recognition performed on a document part freely laid out over a plurality of lines in the product tag area. Figs. 17 to 19 schematically illustrate this processing. Fig. 17 illustrates binarized image information, and Fig. 18 is a diagram illustrating a state in which boxes (areas indicated by broken lines) are generated. In addition, Fig. 19 is a diagram illustrating a state in which blocks (areas indicated by broken lines) are generated.

As described above, the in-product tag information specification processing unit 254 is capable of conducting character recognition of the information written in the product tag.

When the second method is used by the product tag specification processing unit 253, the position and size (height, width) of each character frame in which the goods identification information such as the tax-exclusive price, the tax-inclusive price, the manufacturer name, and the name of the goods, and the rated specification are written are set beforehand in the image information of the product tag as the template. Therefore, the image information of the corresponding part is cut out from the product tag area that has been specified by the product tag specification processing unit 253, and the OCR recognition processing is performed. In this situation, by defining, as a restriction condition, a character type (for example, which of numeral, Roman character, symbol, Japanese kana character, and Japanese kanji character is included, and the like) used in the goods identification information such as the price, the manufacturer name, and the name of the goods, and the rated specification, it is possible to improve the accuracy in the OCR recognition processing.

In a case where the third method is used by the product tag specification processing unit 253, in-product tag information may be specified by use of the deep learning. In this case, the in-product tag information specification processing unit 254 may input the image information of the product tag area into the learning model in which the weighting coefficients between neurons of the respective layers of the neural network including a large number of intermediate layers are optimized, and may specify the goods identification information such as the tax-exclusive price, the tax-inclusive price, the manufacturer name, and the name of the goods, and information of the rated specification or the like included in the product tag area, based on its output value. As the learning model, it is possible to use a model in which the goods identification information such as the tax-exclusive price, the tax-inclusive price, the manufacturer name, and the name of the goods, and the information of the rated specification or the like are given, as correct answer data, to the image information of various product tag areas.

The product tag recognition processing unit 25 may collectively perform two or more types of the processing by the product tag arrangement area correct placement processing unit 252, the product tag specification processing unit 253, and the in-product tag information specification processing unit 254, by use of the deep learning or the like.

Furthermore, the in-product tag information specification processing unit 254 may perform processing of checking consistency of the information that has been read. As consistency check processing, two types of consistency check processing that are consistency check processing by dictionary collation and a logical check are preferably performed.

The consistency check processing by the dictionary collation will be performed, for example, as follows. The information processing system 1 includes a goods dictionary (not illustrated) that stores goods identification information such as a name of goods having a possibility of being displayed on a display shelf and code information (for example, a JAN code) corresponding thereto in association with each other. Then, character string similarity degree evaluation is conducted between a character string other than the character string that has been read from an area indicating the price that has been recognized by the in-product tag information specification processing unit 254 and the goods identification information such as all names of the goods registered in the goods dictionary. For example, an editing distance (Levenshtein distance), a Jaro-winkler distance, or the like can be used.

In a case where there is one maximum value of the character string similarity degree obtained above, the goods identification information such as the name of the goods is set as a final candidate. Then, an allowable similarity degree is defined beforehand with regard to the length of the character string of the goods identification information such as the name of the goods that is the final candidate. In a case where the similarity degree is equal to or greater than the allowable similarity degree, the goods identification information such as the name of the goods is identified. In a case where the similarity degree does not reach the allowable similarity degree, the character string that has been read is kept unconfirmed. In addition, in a case where there are a plurality of goods each having the similarity degree of the maximum value, the character string that has been read is kept unconfirmed.

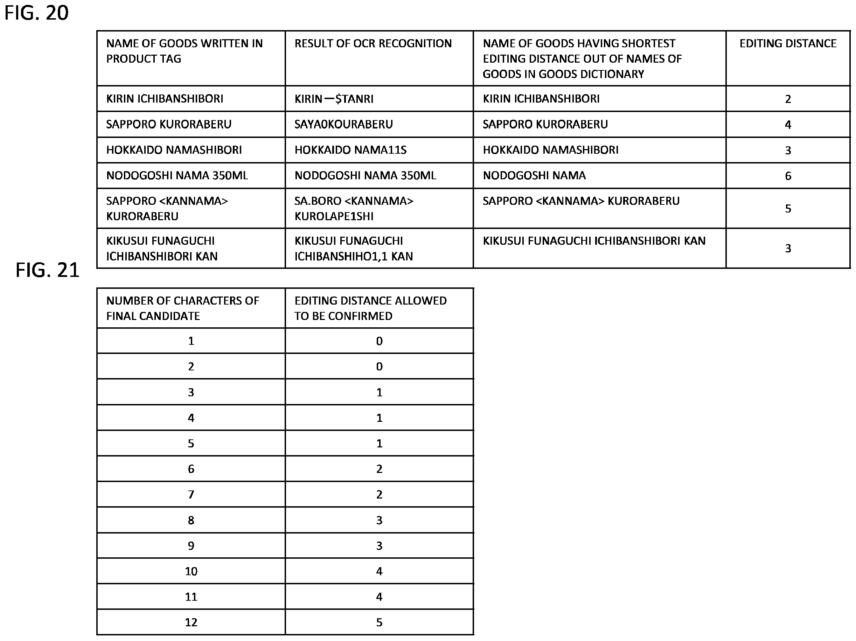

An editing distance that is one of the character string similarity degree evaluations, is one type of a distance indicating how two character strings are different from each other, and specifically denotes a minimum number of procedures necessary for transforming one character string into the other character string by insertion, deletion, or substitution of one character. Fig. 20 illustrates examples of names of the goods written in product tags, results of the OCR recognition, the names of the goods having minimum editing distances among the names of the goods stored in a goods dictionary, and editing distances. In addition, Fig. 21 illustrates a table of a correspondence relationship of the editing distances allowed to be confirmed for every number of characters of the final candidate. Note that in the present specification, a description will be given with regard to a case where processing is performed by use of the editing distance. However, the character string similarity degree evaluation, by which the similarity degree is defined to be greater by substitution than by insertion or deletion, may be conducted.

Then, after the goods identification information such as the name of the goods having a minimum editing distance is obtained, an editing distance of a character string obtained by excluding a corresponding part of the goods identification information such as the name of the goods from a result of the OCR recognition or the like with respect to each rated specification stored in a separately provided rated specification dictionary (not illustrated) and an editing distance with respect to each manufacturer name stored in a manufacturer name dictionary (not illustrated) are respectively obtained. For example, in an example of "Nodogoshi Nama 350ml" in Fig. 20, the part of "350ml" matches "350ml" in the rated specification dictionary at an editing distance 0, and is identified as a character string of a rated specification part. Similarly, the editing distance is also obtained for a manufacturer name, and a character string at the minimum editing distance is identified as the manufacturer name. Then, the character strings of the rated specification part and the manufacturer name part are removed from the OCR recognition result. To the remaining character string after the removal, a character string having a shortest editing distance in the goods name dictionary is obtained, and it is determined whether the character string falls within an allowable editing distance. In a case where it falls within the allowable editing distance, the goods identification information such as the name of the goods, the manufacturer name, and the rated specification are confirmed. By performing the processing as described above, also in a case where the goods identification information such as the name of the goods includes the rated specification and the manufacturer name, it is possible to confirm them appropriately. Note that the rated specification dictionary denotes a dictionary that stores rated specifications (volumes and the like) of the goods having a possibility of being displayed on a display shelf. The manufacturer name dictionary denotes a dictionary that stores manufacturer names of the goods having a possibility of being displayed on a display shelf.

In order for a user to finally determine and approve the recognition result by the in-product tag information specification processing unit 254, in making a display for receiving an input such as a selection of a recognition result, the display is desirably made in a method capable of specifying a confirmed character string and an unconfirmed character string. For example, different colors are used between the confirmed character string and the unconfirmed character string, or information indicating confirmed or unconfirmed is attached to the confirmed character string and/or the unconfirmed character string. Regarding the unconfirmed character string, in a case where there are a plurality of pieces of goods identification information such as the name of the goods having the minimum editing distance, each piece of goods identification information may be displayed.

The logical check (determination processing of logical consistency on recognized information) by the in-product tag information specification processing unit 254 can be performed as follows. For example, in a case where two prices are read as price areas, one is a tax-exclusive price and the other one is a tax-inclusive price. However, in a case where the tax-exclusive price is higher than the tax-inclusive price, they are reversed and then subject to recognition. In addition, in a case where a value obtained by multiplying a consumption tax rate by the tax-exclusive price is not equal to the tax-inclusive price, it is assumed that either one of the tax-exclusive price or the tax-inclusive price or both of them have been erroneously recognized. Furthermore, in a case where the goods identification information such as the name of the goods is recognized, it is determined whether the goods falls within a usual price range of the goods or a goods category. Further, it may be determined whether a correspondence relationship among the goods identification information such as the name of the goods, the manufacturer name, and the rated specification match.

By checking the consistency of the information in the product tag as described above, it is possible to confirm the information included in the product tag that appears in the captured image information. The information that has been confirmed in this manner can be output in a table format, for example.

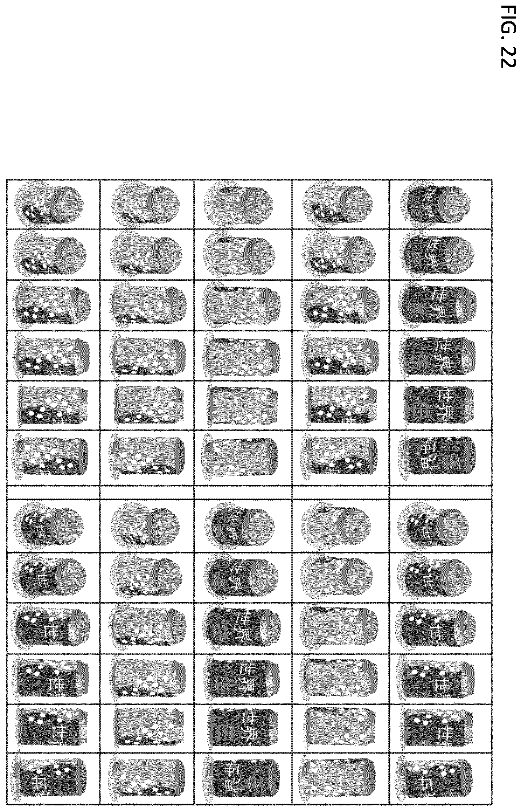

The sample information storage unit 26 in the management terminal 2 stores sample information for identifying which goods are displayed on each shelf of the display shelf that appears in the correct placement image information. The sample information denotes image information obtained by imaging goods having a possibility of being displayed on a display shelf from a plurality of angles, such as up and down, left and right, and oblique. Fig. 22 illustrates an example of the sample information stored in the sample information storage unit 26. Fig. 22 illustrates a case where canned beer has been imaged from various angles as the sample information, without being limited to the canned beer. The sample information storage unit 26 stores the sample information and the goods identification information in association with each other.

Note that together with the sample information or instead of the sample information, the sample information storage unit 26 may store information that has been extracted from the sample information and that is necessary for calculating the similarity, for example, information of a pair of an image feature quantity and its position. It is assumed that the sample information also includes the information necessary for calculating the similarity. In this case, the displayed goods recognition processing unit 24 no longer has to calculate the image feature quantity for the sample information, whenever performing the matching processing between the image information of the area of the place to be described later and the sample information, and the calculation time can be shortened.

In addition, the sample information stored in the sample information storage unit 26 can also be used as correct answer data, when the displayed goods recognition processing unit 24 performs processing of recognizing goods that are displayed on the display shelf by use of the deep learning.

The recognition information storage unit 27 stores information indicating the goods identification information of the goods displayed in each place on each shelf of the display shelf and the in-product tag information of the product tag. For example, in association with the goods identification information, in association with the imaged date and time information, the store information, the image information identification information of the captured image information, the image identification information of the correct placement image information, and the place identification information for identifying the place, is stored in the recognition information storage unit 27. In addition, shadow date and time information, the store information, the image information identification information of the captured image information, the image identification information of correct placement image information, and the like may be stored in association with the in-product tag information of the product tag of the display shelf. Further, the goods type of the goods displayed in each place of the display shelf and the in-product tag information of the product tag may be stored in association with each other. Fig. 23 schematically illustrates a relationship between a place and a face in the display shelf.

The correspondence relationship determination processing unit 28 determines a correspondence relationship between the goods type of the goods displayed in each place of the display shelf and the product tag. In a case where identical goods are displayed side by side in each place, those goods will be collectively referred to as a goods type. Therefore, in a case where the goods are displayed only in one place, such goods have one goods type and one piece of goods identification information. In addition, in a case where the goods having identical goods identification information are displayed continuously in two places in a lateral direction, the goods types of the two places are integrated into one.

The processing by the correspondence relationship determination processing unit 28 may be any processing, as long as the processing determines a correspondence relationship between the goods type of the goods displayed in each place on the display shelf and the product tag. For example, by comparing the goods type of the goods displayed in each place that has been recognized by the displayed goods recognition processing unit 24 with the goods identification information in the in-product tag information that has been recognized by the product tag recognition processing unit 25 and associating them, the correspondence relationship between the goods type of the goods displayed in each place on the display shelf and the product tag may be determined.

In addition, as another processing method, the correspondence relationship may be determined by use of the number of goods types and the number of product tags as follows. In this case, the correspondence relationship determination processing unit 28 performs, for example, first processing, and second or subsequent processing separately.

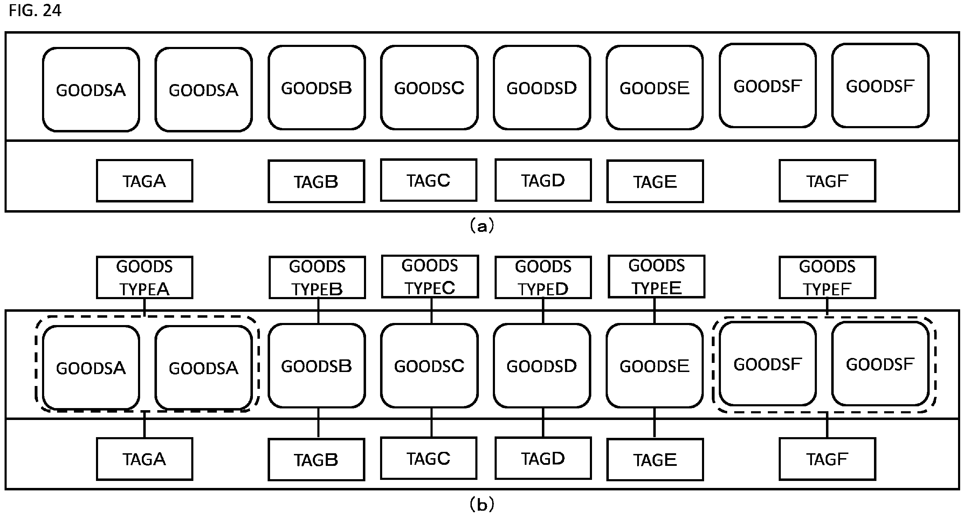

The first processing by the correspondence relationship determination processing unit 28 can be performed as follows. First, in an area to be a processing target, for example, in each shelf area to be the processing target, the number of the goods types is compared with the number of the product tags. In this situation, regarding the number of the goods types, a place stored as "empty" in the goods type identification information storage unit may also be counted as one goods type. In a case where the number of the goods types and the number of the product tags are equal to each other, the goods types and the product tags are associated on a one-to-one basis in a predetermined direction, for example, sequentially from the left side. Fig. 24 schematically illustrates this processing. Fig. 24(a) is a diagram illustrating the goods identification information that has been recognized by the displayed goods recognition processing unit 24 and the goods identification information that has been recognized by the product tag recognition processing unit 25 in a certain shelf area, and Fig. 24(b) is a diagram illustrating a state in which the goods type of the displayed goods and the goods identification information of the product tag are associated with each other, based on Fig. 24(a).

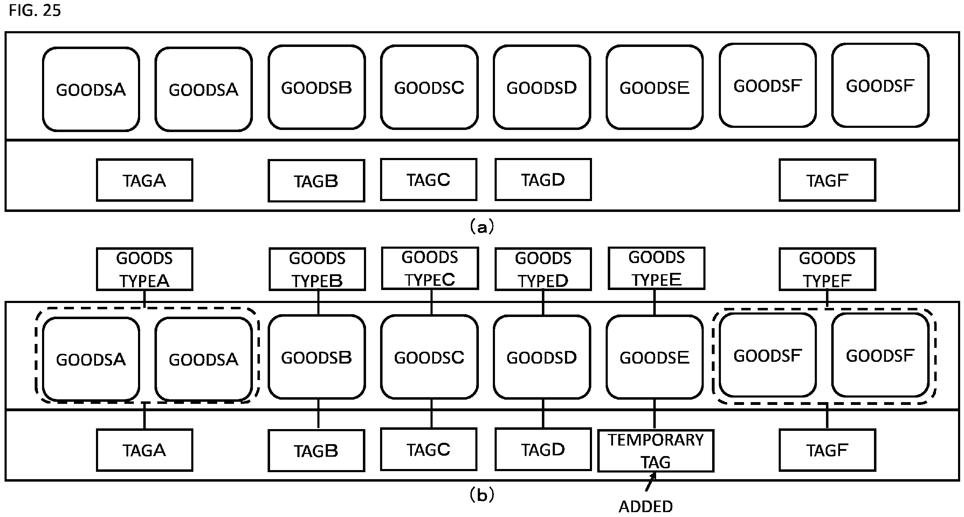

In addition, in a case where the number of the goods types is greater than the number of the product tags, a temporary product tag is created so that the number of the goods types and the number of the product tags are equal to each other, and is arranged in the product tag arrangement area. In this case, a given notification may be provided for an operator so as to create the temporary product tag, or after the OCR recognition is conducted on the information of the goods type and the information of the product tag and the corresponding goods type and product tag are associated with each other, a temporary product tag may be automatically created in a position of the product tag arrangement area corresponding to a remaining goods type (for example, in a position of the product tag arrangement area on a lower side or an upper side of the goods type). Fig. 25 schematically illustrates this processing. Fig. 25(a) is a diagram illustrating the goods identification information that has been recognized by the displayed goods recognition processing unit 24 and the goods identification information that has been recognized by the product tag recognition processing unit 25 in a certain shelf area, and Fig. 25(b) is a diagram illustrating a state in which a temporary product tag is created and arranged on the product tag, based on Fig. 25(a), and the goods type of the displayed goods and the goods identification information of the product tag are associated with each other. The operator inputs the goods identification information and the like of the temporary product tag, and then the temporary product tag is registered as an official product tag.

In order to automatically create the temporary product tag, first, a range in which the temporary product tag having a predetermined size can be arranged is specified in the product tag arrangement area. Then, the information of the goods type is compared with the information of the product tag, an identical or similar pair is associated with each other, and the goods type that cannot be associated is specified. Then, for the goods type that cannot be specified, a temporary product tag is created in a range in which the specified temporary product tag can be arranged in the product tag arrangement area corresponding to the goods type (for example, an upper side or a lower side of the product tag arrangement area). In a case where a predetermined condition is satisfied, such as a case where there is no range in which the specified temporary product tag can be arranged, a case where a difference between the number of the goods types and the number of the product tags is two or more, or the like, an error may be notified to prompt the operator to make an input.

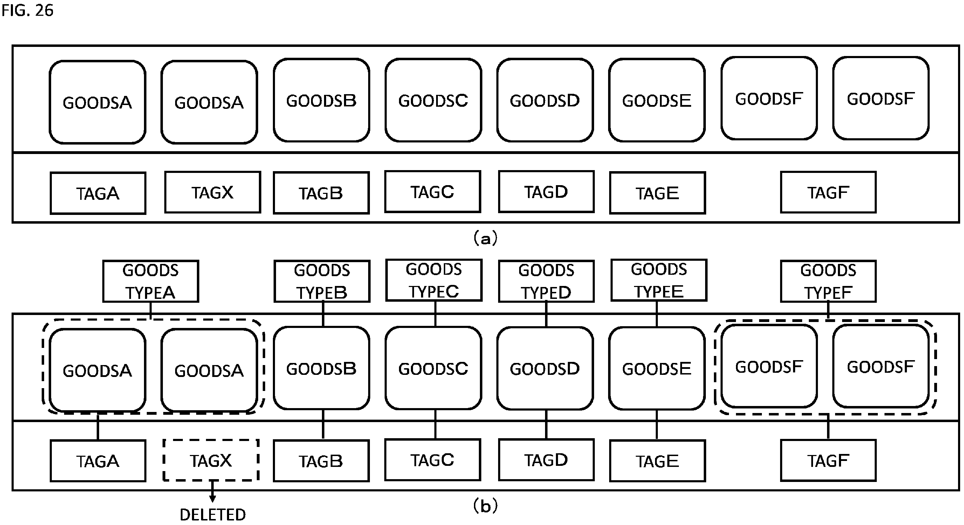

Furthermore, in a case where the number of the goods types is smaller than the number of the product tags, an unnecessary product tag is deleted so that the number of the goods types and the number of the product tags are equal to each other. In this case, a given notification may be provided for the operator so as to delete the product tag, or after the OCR recognition is conducted on the information of the goods type and the information of the product tag to associate the corresponding goods type with product tag, an unassociated product tag may be automatically deleted. Fig. 26 schematically illustrates this processing. Fig. 26(a) is a diagram illustrating the goods identification information that has been recognized by the displayed goods recognition processing unit 24 and the goods identification information that has been recognized by the product tag recognition processing unit 25 in a certain shelf area, and Fig. 26(b) is a diagram illustrating a state in which an unnecessary product tag is deleted, based on Fig. 26(a), and the goods type of the displayed goods and the goods identification information of the product tag are associated with each other.

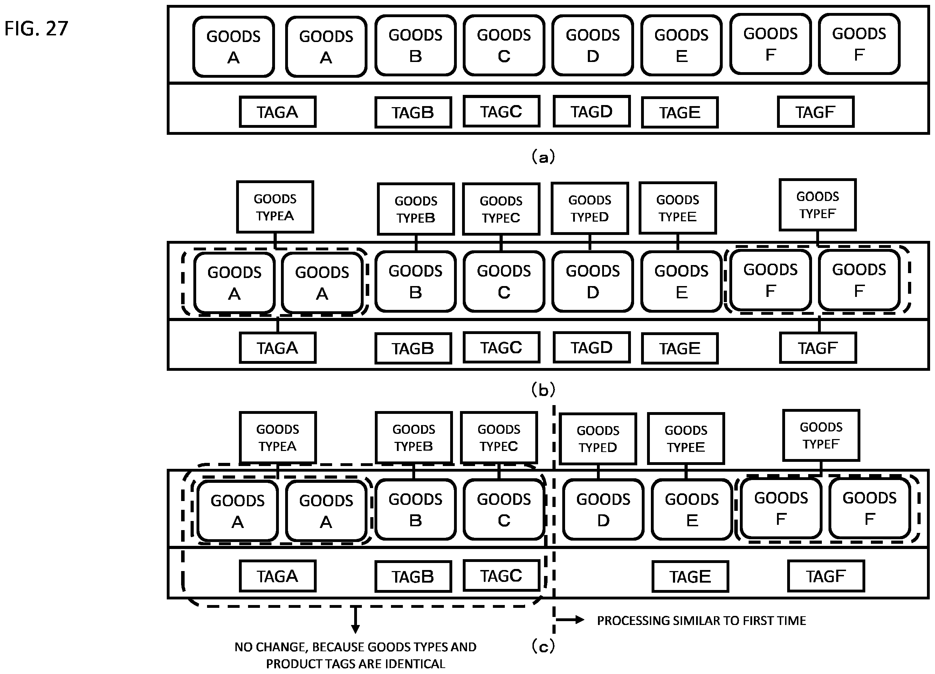

The second or subsequent processing by the correspondence relationship determination processing unit 28 can be performed as follows. First, sequentially from an initial position of an area to be a processing target, for example, sequentially from a left end of each shelf area, a combination of the goods type and the product tag is associated with a combination of them before the current processing, for example, in the previous processing, to be identical to each other within an identical range to the combination of them before the current processing. Then, a separation is set in a position where the combination of the goods type and the product tag differs, and processing similar to the above-described first processing is performed from a separation position. Fig. 27 schematically illustrates this processing. Fig. 27(a) is a diagram illustrating the goods identification information that has been recognized by the displayed goods recognition processing unit 24 and the goods identification information that has been recognized by the product tag recognition processing unit 25 for a first time in a certain shelf area, and Fig. 27(b) is a diagram illustrating a state in which the goods type of the displayed goods and the goods identification information of the product tag are associated with each other, based on Fig. 27(a). Fig. 27(c) is a diagram illustrating the goods identification information that has been recognized by the displayed goods recognition processing unit 24 and the goods identification information that has been recognized by the product tag recognition processing unit 25, as second processing. In Fig. 27(c), the processing up to a goods type C is similar to the first processing. Therefore, a separation is set next to the goods type C, and then processing similar to the first processing is performed from a goods type D.

Note that the first processing is not limited to the processing actually performed for the first time, and includes a case where a correspondence relationship between the goods type of the displayed goods and the product tag is set via the operator or the like at an optional timing, and also includes a case where after the processing has been actually performed, for example, 10 times, the first processing is performed again so as to keep the accuracy constant. The second or subsequent processing denotes a case where the first processing is not performed.

The correspondence relationship determination processing unit 28 determines the correspondence relationship between the goods type and the product tag as described above, and stores the correspondence relationship between the goods type and the product tag in a predetermined storage area, for example, the recognition information storage unit 27.

The outer packing change detection processing unit 29 detects a change in the outer packing of the goods, by using the image information of the goods in the place area. In this case, the outer packing change detection processing unit 29 compares the goods displayed in the display shelf in the current processing (N'th times) with the goods displayed in the display shelf in the processing before the current processing, for example, in the previous processing (N-1'th times), and in a case where there is no change and there is a change between the image information of the goods in the place area in the current processing (N'th times) and the image information of the goods in the place area in the processing before the current processing, for example, in the previous processing (N-1'th times), and detects a change in the outer packing of the goods.

Various methods can be used for comparison processing between the goods displayed on the display shelf in the current processing (N'th times) with the goods displayed on the display shelf before the current processing, for example, in the previous processing (N-1'th times).

For example, as a first method, with regard to a place to be processed, the goods identification information that has been recognized by the displayed goods recognition processing unit 24 in the current processing (N'th times) is compared with the goods identification information that has been recognized by the displayed goods recognition processing unit 24 in the processing before the current processing, for example, in the previous processing (N-1'th times). In a case where pieces of the goods identification information are identical to each other, it is determined that there is no change, and in a case where pieces of the goods identification information are not identical to each other, it is determined that there is a change.

As a second method, with regard to the place to be processed, the goods identification information of in-product tag information of the product tag corresponding to the place that has been recognized by the product tag recognition processing unit 25 in the current processing (N'th times) is compared with the goods identification information of the in-product tag information of the product tag corresponding to the place that has been recognized by the product tag recognition processing unit 25 in the processing before the current processing, for example, in the previous processing (N-1'th times). In a case where pieces of the goods identification information are identical to each other, it is determined that there is no change, and in a case where pieces of the goods identification information are not identical to each other, it is determined that there is a change.

As a third method, with regard to the place to be processed, the image information of the product tag corresponding to the place in the current processing (N'th times) is compared with the image information of the product tag corresponding to the place in the processing before the current processing, for example, in the previous processing (N-1'th times). Then, in a case where the similarity degree of the respective pieces of the image information exceeds a certain threshold, it is determined that there is no change, and in a case where the similarity degree is equal to or smaller than the certain threshold, it is determined that there is a change.

As a fourth method, with regard to the place to be processed, association between the goods identification information that has been recognized by the displayed goods recognition processing unit 24 and the in-product tag information that has been recognized by the product tag recognition processing unit 25 in the current processing (N'th times) is compared with association between the goods identification information that has been recognized by the displayed goods recognition processing unit 24 and the in-product tag information that has been recognized by the product tag recognition processing unit 25 in the processing before the current processing, for example, in the previous processing (N-1'th times). In a case where the associations are identical to each other, it is determined that there is no change, and in a case where the associations are not identical to each other, it is determined that there is a change.

The comparison processing between the goods displayed on the display shelf in the current processing (N'th times) and the goods displayed on the display shelf in the processing before the current processing, for example, in the previous processing (N-1'th times) is not limited to the first to fourth methods described above, and any processing may be applicable, as long as it is possible to compare whether the goods displayed on the display shelf in the current processing (N'th times) and the goods displayed on the display shelf in the processing before the current processing are identical goods.

In a case where it is determined that the goods displayed on the display shelf in the current processing and the goods displayed on the display shelf in the processing before the current processing are identical goods, the outer packing change detection processing unit 29, with regard to the image information of the goods in the place area to be processed, compares the image information of the goods in the place area in the current processing with the image information of the goods in the place area before the current processing, for example, in the previous processing, and detects whether there is a change.

As to this comparison, for example, the image information of the goods in the place area in the current processing is compared with the image information of the goods in the place area before the current processing, and the similarity degree is determined. In a case where the similarity degree is equal to or greater than a certain threshold value, it is determined that there is no change, and in a case where the similarity degree is smaller than the certain threshold value, it is determined that there is a change.

As further another processing method, deep learning (deep learning) may be used. In this case, the outer packing change detection processing unit 29 may input the image information of the goods in the current processing and the goods image information of the goods before the current processing, with regard to the place area to be processed, into the learning model in which the weighting coefficient between the neurons of each layer of the neural network in which the intermediate layer includes a large number of layers is optimized, and may determine whether there is a change, based on its output value. As the learning model, it is possible to use a model, in which image information of goods in two or more place areas and information of a result of whether there is a change in the outer packing of the goods have been given, as correct data.

With regard to the image information of the goods in the place area to be processed, the processing of comparing the image information of the goods in the place area in the current processing with the image information of the goods in the place area before the current processing, for example, in the previous processing, and detecting whether there is a change is not limited to these ones, and any processing may be used, as long as whether there is a change is detectable.

The outer packing change detection processing unit 29 determines that the goods displayed on the display shelf in the current processing and the goods displayed on the display shelf in the processing before the current processing are identical goods. With regard to the image information of the goods in the place area to be processed, the outer packing change detection processing unit 29 compares the image information of the goods in the place area in the current processing with the image information of the goods in the place area before the current processing, for example, in the previous processing, and when detecting that there is a change, performs predetermined output processing. As such output processing, for example, a notification of a message given to an administrator can be mentioned. In addition, the image information of the place area in the current processing in which the change has been detected may be displayed.

### First Embodiment

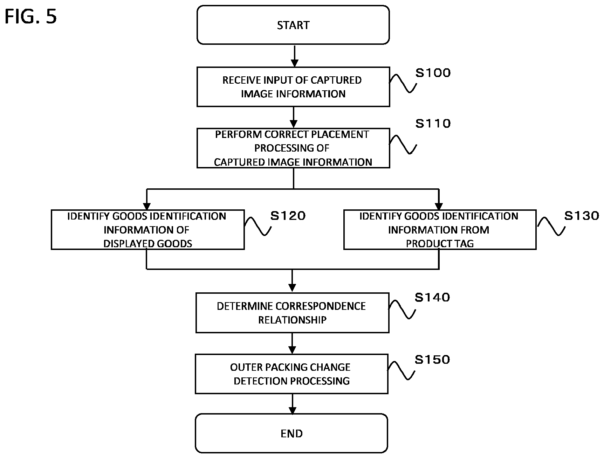

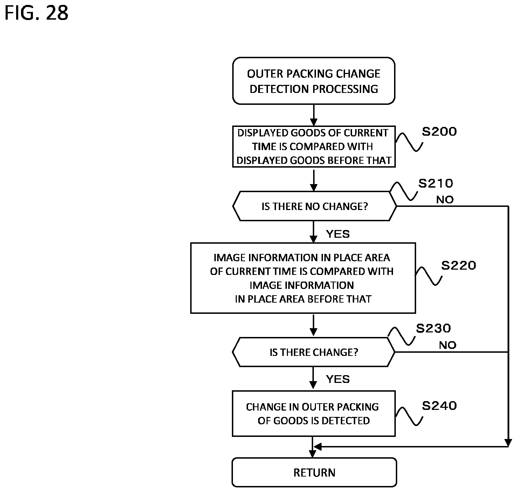

Next, an example of a processing process of the information processing system 1 in the present invention will be described with reference to a flowchart of Fig. 5 and a flowchart of Fig. 28. Note that in the following description, a case where the goods identification information of the displayed goods and the goods identification information of the product tag are specified from the captured image information will be described.

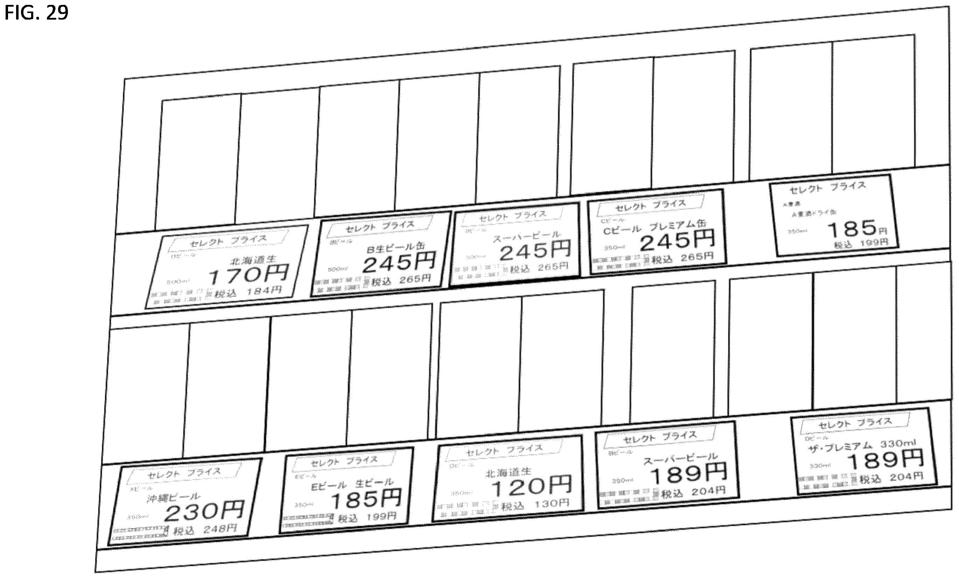

The captured image information obtained by imaging a display shelf in a store is input from the image information input terminal 3, and the input is received by the image information input receipt processing unit 20 of the management terminal 2 (S100). Fig. 29 illustrates an example of the captured image information. In addition, inputs of the imaged date and time, the store identification information, and the image information identification information of the captured image information are received. Then, the image information input receipt processing unit 20 stores the captured image information, the imaged date and time, the store identification information, and the image information identification information of the captured image information, the inputs of which have been received, in the image information storage unit 21 in association with one another.

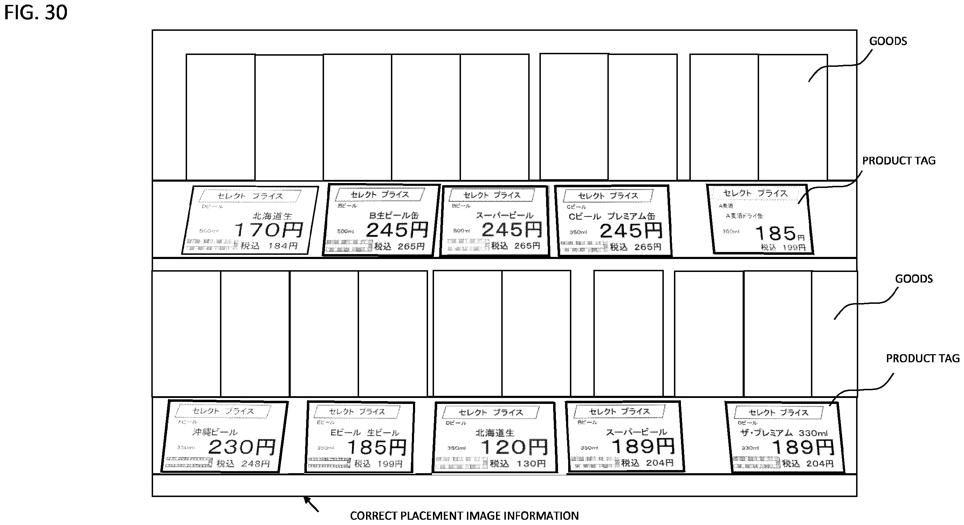

When the management terminal 2 receives a predetermined operation input, the correct placement image information correct placement processing unit extracts the captured image information stored in the image information storage unit 21, receives inputs of four points of shelf positions (positions of a display shelf) that are vertexes used for performing the correct value processing such as the trapezoid correction processing, and performs the correct value processing (S110). Fig. 30 illustrates an example of the captured image information (correct placement image information) that has been subjected to the correct placement processing in this manner.

Then, when the management terminal 2 receives a predetermined operation input for the correct placement image information, the position specification processing unit 23 specifies each shelf position area and a product tag arrangement area. That is, the inputs of each shelf area and the product tag arrangement area in the correct placement image information are received. Fig. 10 is a diagram illustrating a state in which each shelf area and the product tag arrangement area are specified.

When each shelf area and the product tag arrangement area are specified as described above, the displayed goods recognition processing unit 24 performs recognition processing of the displayed goods in each shelf area, and the product tag recognition processing unit 25 performs product tag recognition processing of the product tag arrangement area (S120, S130). Note that the recognition processing of the displayed goods by the displayed goods recognition processing unit 24 and the product tag recognition processing by the product tag recognition processing unit 25 may be performed in parallel with each other or at different timings.

First, the recognition processing of the goods identification information of the goods by the displayed goods recognition processing unit 24 will be described.

The each shelf area processing unit 241 in the displayed goods recognition processing unit 24 cuts out the image information of each shelf area from the correct placement image information, based on the area of each shelf, the input of which has been received. Then, processing of specifying a place is performed on every shelf in the each shelf area image information. Specifically, regarding each shelf in each shelf area, the place is specified by specifying a narrow shadow generated between the goods within a range of a rectangular area constituted of coordinates of four points, specifying a repeated pattern of an image, specifying a step on an upper side of a package, specifying a separation position based on a restriction such as an identical goods width, and the like. The place identification information for identifying the place is applied to the place that has been specified. Then, the coordinates of each place that have been specified are stored in association with the imaged date and time, the store identification information, the image information identification information of the captured image information, the image information identification information of the correct placement image information, and the place identification information for identifying the place. Note that regarding the coordinates of the place, instead of storing the four points, two points capable of specifying the rectangular area may be stored.

When each place on each shelf in the each shelf position area image information of the correct placement image information is specified as described above, the goods identification information specification processing unit 243 performs matching processing with the sample information stored in the sample information storage unit 26 for every place, and specifies the goods identification information of the goods displayed in the place. That is, each image feature quantity is calculated from the image information in the rectangular area of the place on a certain each shelf (the place identification information of the area of this place is defined as X) and each piece of the sample information stored in the sample information storage unit 26, and the similarity degree is determined by obtaining a pair of feature points. Then, the sample information having the highest similarity is specified. In a case where the similarity at that time is equal to or greater than a predetermined threshold value, the goods identification information corresponding to the sample information is specified, based on the sample information storage unit 26. Then, the goods identification information that has been specified is used as the goods identification information of the goods displayed in the place of place identification information X. Note that information indicating "empty" is applied to the place identification information of the place that has been determined not to be similar to any piece of the sample information. The goods identification information specification processing unit 243 stores the goods identification information that has been specified or the information indicating "empty" in the recognition information storage unit 27 in association with the imaged date and time, the store identification information, the image information identification information of the captured image information, the image information identification information of the correct placement image information, and the place identification information.

Note that it is not always possible to specify the goods identification information of all the places. Hence, for the place that cannot be specified, instead of applying the information "empty" from the beginning as described above, an input of the goods identification information is received. The goods identification information, the input of which has been received, is stored in the recognition information storage unit 27 in association with the imaged date and time, the store identification information, the image information identification information of the captured image information, the image information identification information of the correct placement image information, and the place identification information. In addition, similarly, an input may be received for the correction processing of the goods identification information that has been specified. Further, as a result of the correction processing, in a case where an input of "empty" is received, information of "empty" may be applied.

By performing the processing as described above, it is possible to specify the goods identification information of the goods displayed on each shelf of the display shelf that appears in the captured image information.

Note that the recognition processing of the goods identification information of the goods by the displayed goods recognition processing unit 24 is not limited to the above description. For example, the deep learning may be used as having already been described above.

Next, processing of recognizing the information of the product tag by the product tag recognition processing unit 25 will be described.

The product tag arrangement area processing unit 251 of the product tag recognition processing unit 25 cuts out the image information of the product tag arrangement area that has been specified by the position specification processing unit 23, and the product tag arrangement area correct placement processing unit 252 performs the trapezoid correction processing so as to perform the correct placement processing on the image information of the product tag arrangement area.

As the correct placement processing on the image information of the product tag arrangement area, first, edge detection is conducted on the image information of the product tag arrangement area. Then, from the detected edges, a contour line that is equal to or longer than a certain length and that falls within a predetermined angle range from the vertical is specified. Then, from the specified contour lines, leftmost and rightmost contour lines are specified. Fig. 13 illustrates examples of the contour lines specified in this manner. Then, the trapezoid correction processing is performed on the image information of the product tag arrangement area so that the specified contour lines (L1 and L2 in Fig. 13(a) and L3 and L4 in Fig. 13(b)) respectively become vertical lines. By performing such processing, the image information of the product tag arrangement area has been subjected to the correct placement, and thus the image information of the product tag arrangement area that has been subjected to the correct placement illustrated in Fig. 12 can be obtained.

When the correct placement processing on the image information of the product tag arrangement area ends, the product tag specification processing unit 253 specifies individual product tag areas from the image information of the product tag arrangement area, in the first method to the third method.

In the case where the first method is used, a histogram in which the brightness information of the image information from the image information of the product tag arrangement area that has been subjected to the correct placement is laterally integrated is generated, and the rise-up and fall-down positions of the histogram are specified. Then, the specified rise-up of the histogram is specified as the upper side position A of the product tag, and the fall-down position of the histogram is specified as the lower side position B of the product tag.

Next, from the image information of the product tag arrangement area that has been subjected to the correct placement, a part between the upper side position A and the lower side position B is cut out, and a histogram in which the brightness information in the image information of the product tag arrangement area that has been subjected to the correct placement is laterally integrated is generated.

The rise-up positions U and the fall-down positions D are specified in the generated histogram, and the rise-up position U (left side position) and the fall-down position D (right side position) that is present on the right side of the rise-up position U and within a predetermined distance range are specified as a pair to be specified as a product tag area.

In a case where there is no product tag area within a predetermined distance, the product tag area is specified on the right side of the rise-up position U with which a pair cannot be formed, and on the left side of the fall-down position D with which a pair cannot be formed.

By the processing as described above, states in which the respective product tag areas are specified are illustrated in Fig. 16.

In addition, in the case where the second method is used, the product tag specification processing unit 253 specifies the product tag area by performing image matching processing between the image information of the product tag of the template registered beforehand and the image information of the product tag arrangement area that has been subjected to the correct placement.

Furthermore, in the case where the third method is used, the product tag area is specified by use of the deep learning. In this case, the deep learning is performed by use of the learning model in which the product tag area is given, as correct answer data, to the image information of various product tag arrangement areas. For example, the product tag specification processing unit 253 inputs image information of the product tag arrangement area that has been subjected to the correct placement, into the learning model in which the weighting coefficients between neurons of the respective layers of the neural network including a large number of intermediate layers are optimized, and specifies the product tag area, based on its output value.

When the product tag specification processing unit 253 specifies the product tag area as described above, the in-product tag information specification processing unit 254 specifies the information in the product tag.

In the first method by the in-product tag information specification processing unit 254, binarization processing is performed on the specified product tag area to create binarized image information. Then, a box is specified by labeling processing on the binarized image information. Note that the island that does not satisfy the predetermined threshold height or width is regarded as noise not to generate the box, and is removed from the processing target without change.

Then, the height, the width, and the baseline of the generated box are obtained. Adjacent boxes having the same baselines and heights within a predetermined range and having the heights and the widths that fall within a certain threshold range are specified, and the specified boxes are merged to constitute a block. Then, out of the blocks, a block that is the highest in height is estimated as a price area (tax-exclusive price area), and the OCR recognition is conducted. As a result of the OCR recognition, in a case where the price information cannot be obtained (in a case where a character string of numerical values cannot be recognized), the block that is the second highest in height is estimated as the price area (tax-exclusive price area), and the OCR recognition is similarly conducted.

Note that in the OCR recognition described above, it is possible to improve the accuracy in reading the price, by adding recognition of characters that constitute a price display such as "numerals" and "comma" used in the price, as a restriction condition.

As described above, when the price information is acquired from the block that has been estimated to be the price area (tax-exclusive price area) by the OCR recognition, a block other than the price information that has been acquired by estimating to be the price area (tax-exclusive price area) is specified, and the OCR recognition is conducted on each specified block. In this OCR recognition, two types of OCR recognition processing are preferably conducted. That is, standard OCR recognition processing that is usually conducted and OCR recognition processing in which recognition of characters that constitute the price display is added as a restriction condition.

The block that has been specified as described above includes a block of the price area (tax-inclusive price area) and a block of an area for the goods identification information such as the manufacturer name, the name of the goods, and the information of the rated specification or the like. Then, two types of OCR recognition processing are performed on each block. Regarding the block of an area of the goods identification information such as the manufacturer name and the name of the goods, and the information of the rated specification or the like, a character string is recognized in the standard OCR recognition processing, and a character string results in including an error in the OCR recognition processing to which the restriction condition is added. In this case, it is determined whether the recognition results of the two types of the recognition processing are different from each other by a predetermined value or more. In a case where the recognition results are different from each other, the character string that has been subjected to the standard OCR recognition processing is regarded as the recognition result, and it is determined that the block is other than the block of the price area (tax-inclusive price area). On the other hand, for the block of the price area (tax-inclusive price area), the character string of the price information is recognized in the standard OCR recognition processing, and the character string of the price information is recognized also in the OCR recognition processing to which the restriction condition is added. In this case, it is determined whether the recognition results of the two types of recognition processing are different from each other by a predetermined value or more. In a case where the recognition results are not different, it is determined to be a block of the price area (tax-inclusive price area), and the character string that has been recognized by the recognition processing to which the restriction condition is added is determined to be the price information of the recognition result.

As described above, the in-product tag information specification processing unit 254 is capable of conducting character recognition of the information written in the product tag. In order to determine a displayed situation of the goods, it is sufficient if there is the goods identification information of the goods. However, by recognizing another piece of information such as the tax-exclusive price or the tax-inclusive price, it becomes possible to manage also the price information and the like in association with the displayed situation.

Note that in the case where the second method is used by the product tag specification processing unit 253, the positions and sizes of character frames, in which the goods identification information such as the tax-exclusive price, the tax-inclusive price, the manufacturer name, and the name of the goods, and the rated specification are respectively written, are set beforehand as the template of the product tag. Therefore, it is sufficient if the image information of the corresponding part is cut out from the product tag area that has been specified by the product tag specification processing unit 253, and the OCR recognition processing is performed.

In addition, in the case where the third method is used by the product tag specification processing unit 253, processing by the deep learning is performed by use of the learning model that has performed the learning with the information of the goods identification information such as the tax-exclusive price, the tax-inclusive price, the manufacturer name, and the name of the goods, and information of the rated specification or the like to be given as correct answer data to the image information of various product tag areas. The in-product tag information specification processing unit 254 inputs the image information of the product tag area into the learning model in which the weighting coefficients between neurons of the respective layers of the neural network including a large number of intermediate layers are optimized, and specifies the information of the goods identification information such as the tax-exclusive price, the tax-inclusive price, the manufacturer name, and the name of the goods, and information of the rated specification or the like included in the product tag area, based on its output value.

Then, the in-product tag information specification processing unit 254 performs dictionary collation processing with the specified name of the goods or the like. That is, an editing distance between the character string that has been read and the goods identification information such as each name of the goods in the goods dictionary is obtained, the goods identification information such as the name of the goods having a minimum editing distance is specified. In a case where it falls within a predetermined distance, it is identified as the goods identification information such as the name of the goods. Then, a goods name part having a shortest editing distance is removed from the character string that has been read, and the editing distance to each rated specification in the rated specification dictionary is obtained for a remaining partial character string. It is determined whether the minimum editing distance falls within a predetermined distance. In a case where the minimum editing distance falls within the predetermined distance, such a part is identified as a character string of the rated specification. Similarly, a goods name part having a minimum editing distance and a rated specification part are removed from the character string that has been read, an editing distance to each manufacturer name in the manufacturer name dictionary is obtained for a remaining partial character string. It is determined whether the minimum editing distance falls within a predetermined distance. In a case where the minimum editing distance falls within the predetermined distance, such a part is identified as a character string of the manufacturer name. Note that in a case where the Jaro-winkler distance is used instead of the editing distance, it is sufficient to perform processing corresponding to it appropriately.

Furthermore, the in-product tag information specification processing unit 254 performs logical check processing on the character string that has been subjected to the character recognition. That is, it is determined whether the character string that has been subjected to the character recognition is logically inconsistent.

As a result of the logical check, in a case where there is no contradiction, the goods identification information such as the tax-exclusive price, the tax-inclusive price, and the name of the goods, the manufacturer, and the rated specification are specified for each character string that has been recognized. They are stored in a predetermined storage area in association with the imaged date and time, the store identification information, and the image information identification information of the captured image information, and are then output. For example, an output is made in a table format.

As described above, after the displayed goods recognition processing unit 24 recognizes the goods identification information of the goods displayed on each shelf and the product tag recognition processing unit 25 recognizes the goods identification information of the product tag, the correspondence relationship determination processing unit 28 determines a correspondence relationship between the goods type of the goods displayed on each shelf by the displayed goods recognition processing unit 24 and the product tag (S140).

Regarding the goods identification information of the goods displayed on the display shelf, in a case where goods having identical goods identification information are displayed continuously in a plurality of places in a predetermined direction, the correspondence relationship determination processing unit 28 combines those places as one goods type.

Then, in a case where the processing is first processing, the correspondence relationship determination processing unit 28 compares the number of the goods types with the number of the product tags in an each shelf area to be processed, and associates the goods types with the product tags on a one-to-one basis sequentially from the left side, in a case where the numbers are equal to each other (Fig. 24). In addition, in a case where the number of the goods types is greater than the number of the product tags, a temporary product tag is created and arranged in the product tag arrangement area, so that the number of the goods types and the number of the product tags are equal to each other (Fig. 25). Furthermore, in a case where the number of the goods types is smaller than the number of the product tags, an unnecessary product tag is deleted, so that the number of the goods types and the number of the product tags are equal to each other (Fig. 26) .

Further, in a case where the processing is second or subsequent processing, the correspondence relationship determination processing unit 28 associates, sequentially from a left end of each shelf area, a combination of the goods type and the product tag with a combination of them before the current processing, for example, in the previous processing, to be identical to each other within an identical range to the combination of them before the current processing. Then, a separation is set in a position where the combination of the goods type and the product tag differs, and processing similar to the above-described first processing is performed from such a separation position (Fig. 27).

By performing the processing as described above, it becomes possible to associate the correspondence relationship between the goods displayed on the display shelf and the product tag.

Note that the correspondence between the goods type and the product tag in the correspondence relationship determination processing unit 28 is not limited to the above.

The above-described processing is performed, and the outer packing change detection processing unit 29 performs outer packing change detection processing (S150). The outer packing change detection processing will be described with reference to a flowchart of Fig. 28.

First, the outer packing change detection processing unit 29 performs comparison processing between the goods displayed on the display shelf in the current processing (N'th times) with the goods displayed on the display shelf in the previous processing (N-1'th times) by using, for example, the above-described first to fourth methods or any other method (S200).

Then, in a case where it is determined that the goods displayed on the display shelf in the current processing (N'th times) is identical to the goods displayed on the display shelf in the previous processing (N-1'th times) (S210), with regard to the image information of the goods in the place area to be processed, the image information of the goods in the place area in the current processing (N'th times) is compared with the image information of the goods in the place area in the previous processing (N-1'th times) by use of image matching processing, deep learning, or the like, and whether there is a change is detected (S220).

Then, when detecting that there is a change by comparing the image information of the goods in the place area in the current processing with the image information of the goods in the place area in the previous processing (S230), the outer packing change detection processing unit 29 performs predetermined output processing such as notifying an administrator of a predetermined message (S240) .

By performing the above processing, it is possible to detect a case where there is a change in the outer packing of the goods, although the goods are identical. When detecting that there is a change in the outer packing of the goods, the administrator who has confirmed the message or the like can take measures such as creating sample information based on the outer packing of new goods and storing the sample information in the sample information storage unit 26, or creating a new learning model by performing machine learning again using image information including the outer packing of the new goods.

### Second Embodiment

Furthermore, a modification of the specification processing by the place specification processing unit 242 in the first embodiment will be described. In the present embodiment, the processing of specifying the place in the first embodiment is set as the first processing, and processing of automatically specifying the place may be performed as the second or subsequent processing of specifying the place. The processing in this case will be described.

Note that the first processing includes not only the processing for the first time but also a case where the processing in the first embodiment is performed at an optional timing in order to correct a deviation that occurs at the time of automatically specifying. The second or subsequent processing denotes processing performed at any time other than the first time. In addition, in the second or subsequent processing, regarding the captured image information and the correct placement image information obtained by imaging an identical display shelf at an identical opportunity, a case of performing processing on the captured image information and the correct placement image information obtained by imaging at different angles is included.

The place specification processing unit 242 performs processing similar to the processing in the first embodiment, as the first place specification processing. Then, in the second or subsequent place specification processing by the place specification processing unit 242, regarding the identical each shelf of the identical display shelf, the coordinates of the area of the place that have been specified in the previous processing (N-1'th times) of the correct placement image information are extracted, and the extracted coordinates are set to coordinates of the area of the place that have been specified in the current processing (N'th times) of the correct placement image information.

Similarly to the coordinates of the position of each shelf, the coordinates of the area of the place denote relative coordinates with a predetermined position in the display shelf in the correct placement image information as a reference.

### Third Embodiment

Furthermore, as another modification of the first embodiment, as the processing, by the product tag specification processing unit 253, of specifying the goods identification information of the product tag displayed on every product tag arrangement area corresponding to each shelf of the display shelf, the processing in the first embodiment is set as the first specification processing, and the following processing is performed as the second or subsequent specification processing.

The product tag specification processing unit 253 specifies each product tag area from the product tag arrangement area image information that has been subjected to the correct placement image information in the N'th processing. Then, the in-product tag information specification processing unit 254 sequentially compares each product tag area that has been specified with the corresponding product tag area in the product tag arrangement area image information that has been subjected to the correct placement image information of the N-1'th times. For example, the similarity is determined by comparing the image information of a product tag area on a leftmost end that has been specified from the product tag arrangement area image information that has been subjected to the correct placement image information of the N'th times with the image information of the product tag area on the leftmost end that has been specified from the product tag arrangement area image information that has been subjected to the correct placement image information of the N-1'th times. Note that it is possible to specify the image information of the product tag area of the N-1'th times that corresponds to the image information of the product tag area of the N'th times, in various methods using, for example, a sequential order from a predetermined position in the product tag area, coordinate information of the image information of the product tag area approximate to the coordinate information of the image information of the product tag area of the N'th times, or the like.

In addition, regarding the determination of the similarity, in addition to the processing in the above-described respective embodiments, an EMD between signatures (aggregation of image feature quantities and weights) of the image information of each product tag area is calculated, and can be set as an index of the similarity. As the image feature quantity of the signature, for example, the frequency distribution of the image information of the product tag area in the HSV color space is obtained, and grouping is conducted for hue and saturation, so that the image feature quantity can be set with the number of features and the area in the HSV color space. The grouping for the hue and the saturation is conducted to reduce a dependence degree on the brightness so as not to be largely influenced by an imaging condition.

In addition, to accelerate the processing, it is possible to use a similarity such as an L2 distance between image feature quantities such as a color correlogram or a color histogram of the image information in an appropriate color space, instead of the signature and the EMD.

Furthermore, the similarity may be determined by use of the deep learning (deep learning). That is, in this case, the image information of the product tag area of the N'th times and the image information of the corresponding product tag area of the N-1'th times may be input into the learning model in which the weighting coefficients between neurons of the respective layers of the neural network including a large number of intermediate layers are optimized, so that the similarity may be determined, based on its output value. As the learning model, it is possible to use a model in which the similarity degree of the image information between various two product tag areas is given as correct answer data.

In a case where the similarity of the image information of the product tag area of the N'th times is equal to or greater than a certain threshold value, the in-product tag information of the product tag area of the N-1'th times is extracted from the recognition information storage unit 27, and is set as the in-product tag information of the product tag area of the N'th times. Accordingly, it is possible to specify the in-product tag information of the product tag area in the product tag arrangement area image information that is to be a processing target and that has been subjected to the correct placement in the N'th processing. In a case where the similarity is smaller than the certain threshold value, the processing by the in-product tag information specification processing unit 254 may be performed similarly to the first processing.

Note that in comparison with the image information of the product tag area in the product tag arrangement area image information that has been subjected to the correct placement image information of the N-1'th times, not only the comparison with the image information of the corresponding product tag area but also the image information of the product tag area in a predetermined range may be included as comparison targets. For example, in a case of comparing with the image information of a certain product tag area in the product tag arrangement area image information that has been subjected to the correct placement of the N'th times, the comparison target may include, in addition to the corresponding product tag area in the product tag arrangement area image information that has been subjected to the correct placement of the N-1'th times, a product tag area within a predetermined range from such an area, for example, a product tag area located in a position separated by one or more in its left-right direction.

In this case, the image information of the product tag area to be a processing target in the product tag arrangement area image information that has been subjected to the correct placement of the N'th times is compared with the image information of each product tag area in the range to be a comparison target in the product tag arrangement area image information that has been subjected to the correct placement of the N-1'th times, and the in-product tag information of the product tag area of the product tag arrangement area image information that has been subjected to the correct placement in the N-1'th times having the highest similarity is specified. Note that the similarity that is equal to or greater than a certain threshold value may be set as a condition. Then, the in-product tag information of the product tag area of the product tag arrangement area image information that has been subjected to the correct placement of the N-1'th times is extracted, and is set as the in-product tag information of the product tag area to be a processing target in the product tag arrangement area image information that has been subjected to the correct placement of the N'th times.

As a result of the comparison with the image information of the product tag arrangement area of the product tag arrangement area image information that has been subjected to the correct placement of the N-1'th times, in a case where a candidate for the in-product tag information cannot be specified because the similarity does not satisfy a threshold value or the like, similar processing to the first processing is performed on the image information of the product tag area to be a processing target in the product tag arrangement area image information that has been subjected to the correct placement of the N'th times.

As described above, the in-product tag information of the product tag area that has been specified is stored in the recognition information storage unit 27 in association with the imaged date and time information, the store information, the image information identification information of the captured image information, the image identification information of the correct placement image information, and the identification information for identifying the product tag area.

### Fourth Embodiment

In the first to third embodiments, in each piece of the image information obtained by imaging an identical display shelf at an identical opportunity at different angles, the goods identification information in a place is specified, and the corresponding places are compared with each other to confirm the goods identification information in such a place. Hence, instead of specifying the goods identification information in the place for each piece of the image information obtained by imaging at different angles, it may be configured such that one piece of the image information is created by synthesizing in advance the pieces of the image information obtained by imaging at different angles and deleting a part where light or the like is reflected, and then the processing of specifying the goods identification information in the place is performed on such one piece of the image information.

### Fifth Embodiment

The processing of the above-described first to fourth embodiments can be appropriately combined. In addition, each type of the processing is not limited to the order described in the specification in the present invention, and can be appropriately changed within the scope of achieving the object. In addition, each type of the processing by the displayed goods recognition processing unit 24 and the product tag recognition processing unit 25 is performed on the correct placement image information that has been subjected to the correct placement processing on the captured image information, but may be performed on the captured image information. In this case, the correct placement image information may be replaced with the captured image information.

Furthermore, in the processing of the above-described first to fourth embodiments, the displayed goods recognition processing unit 24 specifies the identification information of the goods from the captured image information or the correct placement image information, and the product tag recognition processing unit 25 specifies the identification information of the goods. In addition to recognition of character information written in the product tag, the product tag recognition processing unit 25 may read coded information of the goods identification information provided in the product tag or in its vicinity, or may be configured to read the goods identification information from an IC tag or the like provided in the product tag or in its vicinity. That is, the product tag recognition processing unit 25 is not limited to performing the processing of recognizing the characters written in the product tag from the image information, and may perform processing of reading the goods identification information from the product tag or the IC tag in the vicinity of the product tag.

Furthermore, the displayed goods recognition processing unit 24 may specify the goods displayed on the display shelf, based on the captured image information, and in addition, may attach an IC tag to the displayed goods, may read the goods identification information stored in such an IC tag, and may specify the goods identification information of the goods displayed on the display shelf. That is, the displayed goods recognition processing unit 24 is not limited to performing the processing of recognizing the displayed goods from the image information, and may perform processing of reading the goods identification information from the IC tag attached to the goods or its vicinity.

In a case where the displayed goods recognition processing unit 24 reads the goods identification information from the IC tag attached to the goods, and the product tag recognition processing unit 25 reads the goods identification information from the product tag or the IC tag installed in its vicinity, pieces of the goods identification information are respectively read from the IC tags. Therefore, in the IC tags, the goods identification information of the IC tag attached to the goods and the goods identification information of the IC tag attached to the product tag are preferably identifiable by a flag or the like.

In a case of reading the goods identification information from the IC tag of the goods and/or the product tag in this manner and determining the identity of the displayed goods from it, the displayed goods recognition processing unit 24 or the product tag recognition processing unit 25 do not have to perform processing of recognizing the goods identification information, based on the captured image information. It is sufficient if the image information of the goods in each place area is specified. Then, when determining that the goods displayed in the current processing and the goods displayed in the previous processing are identical to each other in accordance with the goods identification information that has been read from the above-described IC tag, the outer packing change detection processing unit 29 detects whether there is a change in the image information of the area of the place to be processed between the current processing and the previous processing.

### Sixth Embodiment

In the information processing system 1 in the present invention, in the outer packing change detection processing unit 29, the identity between the goods displayed on the display shelf in the current processing and the goods displayed on the display shelf in the processing before the current processing is determined. In a case where they are identical to each other, the image information of the goods in the place area is compared with the image information of the goods in the place area before the current processing with regard to the place area to be processed. In a case where it is possible to detect whether there is a change in the outer packing of the goods, each processing other than that, for example, the position specification processing unit 23, the displayed goods recognition processing unit 24, the product tag recognition processing unit 25, and the correspondence relationship determination processing unit 28 do not have to perform a part or all of the processing, or the processing unit itself does not have to be provided. That is, it is only sufficient to implement a processing function to be suited to the processing in the outer packing change detection processing unit 29.

### Seventh Embodiment

In the above-described first to sixth embodiments, a display shelf in a convenience store or a supermarket has been described as an example. However, without being limited thereto, the present invention is applicable to any genre, as long as the identity of the goods displayed on the display shelf can be determined and the image information of the displayed goods can be compared. For example, the present invention is applicable to a case of using image information including an image of pharmaceutical goods (goods) displayed on a display shelf (pharmaceutical shelf) and a label (product tag) indicating the name or the like of the pharmaceutical goods displayed on the display shelf. Similarly, the present invention is also applicable to a case of using image information including an image of goods displayed on a display shelf in a warehouse and a product tag indicating the name or the like of the goods displayed on the display shelf.

### Industrial Applicability

By using the information processing system 1 in the present invention, it becomes possible to detect that there is no change of the goods but there is a change in outer packing of the goods.

### Reference Signs List

1 Information processing system
2 Management terminal
3 Image information input terminal
20 Image information input receipt processing unit
21 Image information storage unit
22 Image information correct placement processing unit
23 Position specification processing unit
24 Displayed goods recognition processing unit
25 Product tag recognition processing unit
26 Sample information storage unit
27 Recognition information storage unit
28 Correspondence relationship determination processing unit
29 Outer packing change detection processing unit
70 Arithmetic device
71 Storage device
72 Display device
73 Input device
74 Communication device
241 Each shelf area processing unit
242 Place specification processing unit
243 Goods identification information specification processing unit
244 Each shelf image matching processing unit
251 Product tag arrangement area processing unit
252 Product tag arrangement area correct placement processing unit
253 Product tag specification processing unit
254 In-product tag information specification processing unit

## Claims

1. An information processing system that detects a change in outer packing of goods displayed on a display shelf,
the information processing system comprising:
an image information input receipt processing unit configured to receive an input of image information obtained by imaging the display shelf; and
an outer packing change detection processing unit configured to detect the change in the outer packing of the goods that appears in the image information, wherein
the outer packing change detection processing unit
determines whether there is a change of the goods displayed on the display shelf between a current time and before the current time, and
in a case where there is no change in the goods displayed, determines whether there is the change in the outer packing of the goods that appears in the image information between the current time and before the current time.

2. The information processing system according to claim 1, wherein
the outer packing change detection processing unit
compares the current time with before the current time with regard to goods identification information of the goods identified from the image information, or the goods displayed on the display shelf or an IC tag attached to a product tag, and determines presence or absence of the change.

3. The information processing system according to claim 2, wherein
the outer packing change detection processing unit
compares goods identification information recognized from a place or a face of the image information, or an area of a product tag in current processing with goods identification information recognized from a place or a face of the image information, or an area of a product tag in processing before the current processing, and determines the presence or the absence of the change in the goods displayed on the display shelf.

4. The information processing system according to claim 2, wherein
the outer packing change detection processing unit
compares image information of the product tag of the image information in current processing with image information of the product tag of image information in processing before the current processing, and determines the presence or the absence of the change in the goods displayed on the display shelf.

5. The information processing system according to claim 2, wherein
the outer packing change detection processing unit
compares association between the goods displayed and the product tag in current processing with association between the goods displayed and the product tag in processing before the current processing, and detects the presence or the absence of the change in the goods displayed on the display shelf.

6. The information processing system according to one of claims 1 to 5, wherein
the outer packing change detection processing unit
with regard to image information of the goods in a place area to be processed, compares image information of the goods in the place area of the current time with image information of the goods in the place area before the current time, and determines whether there is the change in the outer packing of the goods.

7. The information processing system according to any one of claims 1 to 5, wherein
the outer packing change detection processing unit
with regard to image information of the goods of a place area to be processed, inputs image information of the goods in the place area of the current time and image information of the goods in the place area before the current time into a learning model in which a weighting coefficient between neurons of each layer of a neural network including a large number of intermediate layers is optimized, and determines whether there is the change in the outer packing of the goods in the place area, based on its output value, and
the learning model
gives image information of a plurality of goods and information of a result of whether there is a change in the outer packing of the goods, as correct data, to cause performing of machine learning.

8. An information processing program for causing a computer to function as:
an image information input receipt processing unit configured to receive an input of image information obtained by imaging the display shelf; and
an outer packing change detection processing unit configured to detect a change in the outer packing of the goods that appears in the image information, wherein
the outer packing change detection processing unit
determines whether there is a change of the goods displayed on the display shelf between a current time and before the current time, and
in a case where there is no change in the goods displayed, determines whether there is the change in the outer packing of the goods that appears in the image information between the current time and before the current time.
